(19) **Europäisches Patentamt / European Patent Office / Office européen des brevets**

(11) **EP 3 466 679 B1**

(12) **EUROPEAN PATENT SPECIFICATION**

(45) Date of publication and mention
of the grant of the patent:
**29.07.2020 Bulletin 2020/31**

(21) Application number: **17805941.6**

(22) Date of filing: **29.05.2017**

(51) Int Cl.:
**B32B 27/00** $^{(2006.01)}$   **B29C 55/14** $^{(2006.01)}$
**B29C 67/20** $^{(2006.01)}$   **B32B 27/32** $^{(2006.01)}$
**C08J 9/00** $^{(2006.01)}$   **B29L 7/00** $^{(2006.01)}$
**B29L 9/00** $^{(2006.01)}$   **B32B 27/08** $^{(2006.01)}$
**B29C 55/02** $^{(2006.01)}$

(86) International application number:
**PCT/IB2017/000637**

(87) International publication number:
**WO 2017/208062 (07.12.2017 Gazette 2017/49)**

(54) **TRANSLUCENT STRETCHED FILM**

DURCHSCHEINENDE GESTRECKTE FOLIE

FILM ÉTIRÉ TRANSLUCIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2016 JP 2016109469
31.05.2016 JP 2016109520
19.04.2017 JP 2017083157
19.04.2017 JP 2017083158**

(43) Date of publication of application:
**10.04.2019 Bulletin 2019/15**

(73) Proprietor: **Oji Holdings Corporation
Chuo-ku
Tokyo 104-0061 (JP)**

(72) Inventors:
• **MORI, Ryosuke
Chuo-ku
Tokyo 104-0061 (JP)**

• **IKEDA, Kazuo
Chuo-ku
Tokyo 104-0061 (JP)**
• **SUEI, Takumi
Chuo-ku
Tokyo 104-0061 (JP)**
• **KAWAI, Masato
Chuo-ku
Tokyo 104-0061 (JP)**

(74) Representative: **Godemeyer Blum Lenze
Patentanwälte
Partnerschaft mbB - werkpatent
An den Gärten 7
51491 Overath (DE)**

(56) References cited:
**EP-A1- 1 340 783      WO-A1-02/28949
JP-A- H1 135 717      JP-A- H09 272 188
JP-A- 2002 052 674      JP-A- 2014 181 312
JP-A- 2016 052 732      JP-A- 2016 138 233
JP-A- 2017 052 932      JP-A- 2017 132 841**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

The present patent application claims the priorities based on Japanese Patent Application No. 2016-109469 (filing date: May 31, 2016), Japanese Patent Application No. 2016-109520 (filing date: May 31, 2016), Japanese Patent Application No. 2017-083157 (filing date: April 19, 2017), and Japanese Patent Application No. 2017-083158 (filing date: April 19, 2017).

TECHNICAL FIELD

The present invention relates to a translucent stretched film including at least a base material layer and a surface layer.

BACKGROUND TECHNOLOGY

Since paper having translucency such as tracing paper, glassine paper, paraffin paper or parchment paper is excellent in visibility of a letter or a pattern printed on a surface thereof, and a content wrapped by such paper can be identified, it has heretofore been used in drug packing paper, a food wrapping paper, a cooking sheet, a book jacket, and the like. However, in the paper having translucency, when a thickness thereof is made large, the translucency is lost, and when a thickness thereof is made small, mechanical strength becomes insufficient. Additionally, paper powder is generated upon printing, cutting, packaging or the like, and there may be cases where problems such as deterioration in printability and cutting workability, as well as pollution of packaged products are caused. Additionally, as compared with a plastic film, the paper is low in moisture resistance, water resistance, and oil resistance, and there may be cases where the paper cannot be used in packaging of foods containing moisture and oil or the like. Furthermore, paper has generally no heat-sealability, and cannot be used in packaging form requiring heat-sealability.

In contrast, since a plastic film is excellent in moisture resistance, water resistance, and oil resistance, and has good mechanical strength, it is used in packaging of foods and medicines, and the like. However, the plastic film has high transparency, and unless printing is performed on the entire surface thereof, it is difficult to visually recognize a letter, a pattern or the like. Additionally, since the texture of the plastic film is uniform, high-grade sensation and designability are hardly obtained. For this reason, there has been a problem that the plastic film hardly attracts attention of consumers.

In addition, tracing paper and the like require pencil writability because of its usage, but since the plastic film has too smooth surfaces, writing thereon with a pencil or the like is impossible. Additionally, since the plastic film has luster on its appearance as compared with paper, there may be cases where it cannot be used as a substitute for paper.

Patent Document 1 has proposed a polypropylene biaxially stretched film having pearl luster, which is formed from a polypropylene resin composition containing polypropylene and specific calcium carbonate powder.

Patent Document 2 has proposed an opaque polyolefin-based film including a crystalline polyolefin and a cyclic olefin-based resin.

Patent Document 3 has proposed an opaque polymer film comprising a base material layer comprising a polymeric matrix and a cavitation agent, and at least one additional layer, wherein the cavitation agent comprises solid non-hollow particles of a syndiotactic polystyrene polymer. Patent Document 3 describes that an ethylene norborene copolymer is further contained as a cavitation agent in the above-mentioned polymer film.

Patent document 4 discloses one example of a three layer stretched film comprising a base material layer sandwiched by two surface layers, wherein said base material layer contains a crystalline polypropylene homopolymer with trade name F-300SP, known to have a melting point of 160 ° C, and an amorphous thermoplastic resin with trade name TOPAS 6015S-04, said surface layer containing the same crystalline polypropylene homopolymer, and said translucent stretched film having a total light transmittance of 37%.

Patent document 5 discloses one example of a three layer stretched film comprising a base material layer sandwiched by two surface layers, wherein said base material layer contains a crystalline PP homopolymer having a melting point of 165 °C and an amorphous thermoplastic resin, said surface layer contains a crystalline HDPE with melting point 130 °C and MFR= 5.5 g/10min), and said translucent stretched film has an opacity of 45%.

PRIOR ART DOCUMENTS

Patent Documents

Patent Document 1: Japanese Unexamined Patent Application, First Publication No. Hei 11-005852
Patent Document 2: Japanese Unexamined Patent Application, First Publication No. Hei 8-073618
Patent Document 3: Japanese Translation of PCT International Application, First Publication No. 2003-522054
Patent document 4: JP2017052932.
Patent document 5: EP1340783.

SUMMARY OF THE INVENTION

PROBLEM TO BE SOLVED BY THE INVENTION

However, with regard to the above-mentioned Patent Document 1, since calcium carbonate used in the polypropylene biaxially stretched film is opaque, a translucent film cannot be obtained. Additionally, there may be cases where pollution of packaged products due to detachment of particles or stain of printing plates in a printing application is generated, and it cannot be said that cutting workability is good.

Additionally, with regard to the above-mentioned Patent Document 2, since the opaque polyolefin-based film is a monolayered film of a crystalline polyolefin and a cyclic olefin-based resin, it has luster on its appearance, no texture like paper, and no writability with a pencil or the like.

Furthermore, the polymer film described in the above-mentioned Patent Document 3 is opaque and has no translucency. Additionally, a surface layer having a matte effect is not described, and the above-mentioned polymer film has no texture like paper.

Under such circumstances, there has been demanded a film that has translucency and appearance like paper while being a plastic film having high moisture resistance, water resistance, oil resistance, and mechanical strength as compared with paper, that preferably has excellent printability, and that desirably has pencil writability.

Accordingly, an object of the present invention is to provide a translucent stretched film having an appearance like paper, and preferably a translucent stretched film having excellent printability and desirably pencil writability.

MEANS FOR SOLVING THE PROBLEM

The present inventors have intensively studied, and as a result, found out that an appearance like paper in a translucent stretched film is related to the luster (glossiness) of a surface side and the ununiformity of whiteness due to a base material layer. The present inventors have completed the present invention.

That is, the present invention comprises the following.

[1] A translucent stretched film comprising at least a base material layer and a surface layer,
wherein
the base material layer has at least one layer containing, as resin components, at least a crystalline thermoplastic resin A having a melting point of 120 to 175°C and an amorphous thermoplastic resin B,
the surface layer contains, as a resin component, at least a crystalline thermoplastic resin D having a melt mass flow rate at 190°C and 2.16 kg of 0.02 to 2 g/10 min., and
the translucent stretched film has a total light transmittance of 35 to 85%.
[2] The translucent stretched film according to [1], wherein the amorphous thermoplastic resin B has a glass transition temperature of 135 to 185°C.
[3] The translucent stretched film according to [1] or [2], wherein the base material layer further contains, as a resin component, a crystalline thermoplastic resin C having a melting point of 200 to 280°C.
[4] The translucent stretched film according to any one of [1] to [3], wherein in the base material layer, a content of the amorphous thermoplastic resin B is 2 to 40% by mass based on a total mass of the resin components of the base material layer.
[5] The translucent stretched film according to any one of [1] to [4], wherein the surface layer further contains a crystalline thermoplastic resin A' as a resin component.
[6] The translucent stretched film according to any one of [1] to [5], wherein in the surface layer, a content of the crystalline thermoplastic resin D is 1 to 60% by mass based on a total mass of the resin components of the surface layer.
[7] The translucent stretched film according to any one of [1] to [6], wherein the surface layer further contains, as resin component(s), an amorphous thermoplastic resin B' and/or a crystalline thermoplastic resin C', and a total of contents of the amorphous thermoplastic resin B' and/or the crystalline thermoplastic resin C' is 5 to 30% by mass based on the total mass of the resin components of the surface layer.
[8] The translucent stretched film according to any one of [1] to [7], wherein the amorphous thermoplastic resin B is an amorphous cyclic olefin copolymer.

[9] The translucent stretched film according to any one of [1] to [8], wherein the crystalline thermoplastic resin D is a high density polyethylene.

[10] The translucent stretched film according to any one of [1] to [9], which has a heat-sealable layer on a surface opposite to a surface on which the surface layer is laminated.

[11] The translucent stretched film according to any one of [1] to [10], wherein the surface layer has a 60-degree specular glossiness of 1 to 20%.

[12] The translucent stretched film according to any one of [1] to [11], which does not contain inorganic particles.

[13] Use of a translucent stretched film for packaging, food packaging, medicine packaging, decoration, and labeling, or as a base material for a tape, a base material for printing, poster paper, a heat-sensitive paper base material, and a recording paper base material, the film comprising at least a base material layer and a surface layer, wherein

the base material layer has at least one layer containing, as resin components, at least a crystalline thermoplastic resin A having a melting point of 120 to 175°C and an amorphous thermoplastic resin B,

the surface layer contains, as a resin component, at least a crystalline thermoplastic resin D having a melt mass flow rate at 190°C and 2.16 kg of 0.02 to 2 g/10 min., and

the translucent stretched film has a total light transmittance of 35 to 85%.

EFFECTS OF INVENTION

Since the translucent stretched film of the present invention is white and has translucency, and at the same time, is excellent in mechanical strength, moisture resistance, water resistance, and oil resistance, it can be suitably used in a label, a base material for a tape, a base material for printing, poster paper, a heat-sensitive paper base material, a recording paper base material or the like. Furthermore, since the translucent stretched film of the present invention has ununiformity in whiteness like texture of paper and has a delustered appearance, it has texture like paper (appearance like paper), and as a result, it is easily used as a substrate for paper.

Furthermore, by moderately roughening the surface in order to obtain the delustered appearance, pencil writing is possible like paper.

The translucent stretched film of the present invention has texture of paper even though it does not contain inorganic particles. In such an embodiment, there is neither pollution of packaged products due to detachment of inorganic particles nor stain of printing plates in a printing application, and problems such as roughening of a cut surface and early consumption of a cutting blade are not caused during cutting.

Furthermore, in a certain suitable embodiment of the present invention, since the translucent stretched film of the present invention has excellent printability and heat-sealability, it can be preferably used in a food packaging application.

BEST MODE FOR CARRYING OUT THE INVENTION

In the present specification, "to" in numerical range means not less than and not more than. That is, the notation of $\alpha$ to $\beta$ means not less than $\alpha$ and not more than $\beta$, or not less than $\beta$ and not more than a, and includes $\alpha$ and $\beta$ in the range.

<Translucent Stretched Film 1 of the Present Invention>

A first invention in the present invention relates to a translucent stretched film comprising at least a base material layer and a surface layer, in which the base material layer has at least one layer containing, as resin components, at least a crystalline thermoplastic resin A having a melting point of 120 to 175°C (hereinafter, also referred to as crystalline resin A) and an amorphous thermoplastic resin B (hereinafter, also referred to as amorphous resin B), the surface layer contains, as a resin component, at least a crystalline thermoplastic resin D having a melt mass flow rate at 190°C and 2.16 kg of 0.02 to 2 g/10 min., and the translucent stretched film has a total light transmittance of 35 to 85%. Hereinafter, the relevant film will be described as a translucent stretched film 1 of the present invention. The translucent stretched film 1 of the present invention comprises at least a base material layer and a surface layer, which are laminated, and comprises a plurality of layers. Since the translucent stretched film 1 of the present invention has ununiformity in whiteness like texture of paper and has a delustered appearance, it exhibits an appearance like paper while being a film. Preferably, the translucent stretched film 1 of the present invention is also excellent in printability and pencil writability.

Herein, the crystalline thermoplastic resin refers to a thermoplastic resin, in which a clear melting peak appears in a DSC curve obtained by using DSC when the temperature is raised from -40°C to 300°C at a rate of 20°C/min., maintained at 300°C for 5 minutes, lowered to -40°C at a rate of 20°C/min., and maintained at -40°C for 5 minutes, and thereafter, the temperature is raised again to 300°C at a rate of 20°C/min. under a nitrogen stream.

The amorphous thermoplastic resin refers to a thermoplastic resin, in which a clear melting peak does not appear in the above-mentioned measurement using DSC.

The above-mentioned "the base material layer has at least one layer containing, as resin components, at least a crystalline thermoplastic resin A having a melting point of 120 to 175°C and an amorphous thermoplastic resin B" means that the base material layer can comprise a single layer or a plurality of layers containing, as resin components, at least the crystalline resin A and the amorphous resin B (including the relevant resins A and B concurrently) as a layer constituting the base material layer, and does not mean that a layer containing, as resin components, at least the crystalline resin A and the amorphous resin B (containing the relevant resins A and B concurrently) is formed as a layer separate from the base material layer so as to be adjacent to the base material layer.

[Base Material Layer]

The translucent stretched film 1 of the present invention comprises a base material layer. The base material layer has at least one layer containing, as resin components, at least the crystalline resin A and the amorphous resin B. That is, the base material layer may be either a monolayer or a multilayer, and when the base material layer is a multilayer, the layer containing, as resin components, at least the crystalline resin A and the amorphous resin B (containing the relevant resins A and B concurrently) may be a single layer or may be a multilayer.

When the base material layer of the translucent stretched film 1 contains the crystalline resin A and the amorphous resin B, a partial difference in transmittance is caused depending on the dispersed state of the amorphous resin B in the crystalline resin A and the various sizes of gap parts formed at the periphery thereof, resulting in the ununiformity of whiteness like texture of paper. Additionally, when the surface layer contains the crystalline thermoplastic resin D having a melt mass flow rate in the above-mentioned range, a surface layer having a delustered appearance is obtained. By combining the base material layer and the surface layer, a translucent stretched film having translucency and an appearance like paper can be obtained. In addition, the above-mentioned amorphous resin B itself in the base material layer of the translucent stretched film 1 is not in a hollow state, but in a solid state (or non-hollow state).

The translucent stretched film 1 of the present invention has a total light transmittance of 35 to 85% as described above and as will be described later.

The crystalline resin A has a melting point of 120 to 175°C, preferably 123 to 170°C, more preferably 126 to 166°C, further preferably 130 to 164°C, and particularly preferably 135 to 163°C. When the melting point of the crystalline resin A is lower than 120°C, the heat resistance of the resulting stretched film is deteriorated, and the productivity of the stretched film is lowered. When the melting point of the crystalline resin A exceeds 175°C, it becomes difficult to control the size of a finely divided dispersion of the amorphous resin B in the crystalline resin A.

The crystalline resin A has a glass transition temperature of preferably 50°C or lower, and more preferably -30°C to 30°C. When the glass transition temperature of the crystalline resin A satisfies the above-mentioned requirement and the amorphous resin B has a specific glass transition temperature as will be described later, a moderate gap part can be formed at the interface between the crystalline resin A and the amorphous resin B during stretching of a film, so that this is preferable. Additionally, the productivity of the stretched film, as well as the heat resistance, flexibility, low temperature brittleness, and the like of the resulting stretched film are improved, so that this is preferable.

In the present invention, the melting point and glass transition temperature of the crystalline resin A have been measured using input compensation type DSC, Diamond DSC, manufactured by PerkinElmer, Inc.

The crystalline resin A has a melt mass flow rate at 230°C and 2.16 kg of preferably 0.5 to 10 g/10 min., more preferably 1 to 8 g/10 min., further preferably 2 to 6 g/10 min., and particularly preferably 2.5 to 6 g/10 min. By adjusting the melt mass flow rate in the above-mentioned range, the flowability of the resin becomes within a moderate range, and a stretched film having a thickness with good accuracy can be prepared. Also, it is easy to control the size of the finely divided dispersion of the amorphous resin B in the crystalline resin A, and a desired total light transmittance can be easily obtained. In the present invention, the melt mass flow rate of the crystalline resin A has been measured using a melt indexer manufactured by Toyo Seiki Seisaku-sho, Ltd., in accordance with JIS K 7210:1999. Herein, the finely divided dispersion itself of the above-mentioned amorphous resin B is not in a hollow state, but in a solid state (or also referred to as non-hollow state).

The crystalline resin A is not particularly limited as long as it is a crystalline thermoplastic resin having a melting point of 120 to 175°C, and examples thereof include those having a melting point of 120 to 175°C among a crystalline polyolefin-based resin, a crystalline acetal-based resin, a crystalline polyester-based resin, and a crystalline polyamide-based resin, and the like. These can be used alone or by mixing two or more of them. Among them, a crystalline polyolefin-based resin is preferable, and inter alia, a crystalline polyolefin-based resin having the above-mentioned melting point, or preferably glass transition temperature of the crystalline resin A is preferable, because the crystalline polyolefin-based resin is excellent in stretchability and it is easy to obtain a translucent stretched film having the desired total light transmittance at a suitable film stretching temperature.

Examples of the crystalline polyolefin-based resin include homopolymers and copolymers, a monomer of which is ethylene, propylene, 1-butene, 1-pentene, 3-methyl-1-pentene, 4-methyl-1-pentene, 1-hexene, 1-octene or the like, and these can be used alone or as a mixture of two or more of them. Among them, a crystalline polypropylene-based resin is preferable, and particularly, at least one selected from the group consisting of a crystalline propylene homopolymer and a crystalline copolymer of propylene and ethylene (hereinafter, also referred to as crystalline propylene-ethylene copolymer) is preferable. When the crystalline propylene homopolymer (crystalline polypropylene homopolymer) is used in the crystalline resin A, there is a tendency that the mechanical strength and heat resistance of a film easily improve. When the crystalline propylene-ethylene copolymer is used in the crystalline resin A, there is a tendency that folding crack resistance at a low temperature of a film becomes good, and surface glossiness is easily reduced.

Accordingly, in the crystalline resin A, only a crystalline propylene homopolymer can be used, a mixture of a crystalline propylene homopolymer and a copolymer of propylene and ethylene or the like, and/or other polymer can be used, or a copolymer of propylene and ethylene or the like and/or only other polymer can be used. Also, in the crystalline resin A, a kind of a resin to be used can be selected properly for a layer, depending on the required quality. The above-mentioned other polymer may be an arbitrary polymer that can be used as the crystalline resin A, and may be a crystalline polyolefin-based resin, a crystalline polyester-based resin, a crystalline polyamide-based resin, a crystalline acetal-based resin or the like, other than the above-mentioned crystalline propylene homopolymer and copolymer of propylene and ethylene or the like. Preferably, as the crystalline resin A, two components of the crystalline propylene homopolymer and the crystalline propylene-ethylene copolymer are used in combination. In this case, a preferable mass ratio of the crystalline propylene homopolymer and the crystalline propylene-ethylene copolymer is crystalline propylene homopolymer (P1) : crystalline propylene-ethylene copolymer (P2) = 90 : 10 to 99.5 : 0.5, a more preferable mass ratio is P1 : P2 = 93 : 7 to 99 : 1, and a further preferable mass ratio is P1 : P2 = 95 : 5 to 97 : 3.

As the crystalline propylene homopolymer, a crystalline isotactic polypropylene resin is preferable. In the present invention, in the crystalline isotactic polypropylene resin, preferably, a mesopentad fraction ([mmmm]) that is stereoregularity obtained by high temperature nuclear magnetic resonance (NMR) measurement is preferably 90 to 98%, and more preferably 91 to 95%. When the mesopentad fraction [mmmm] is 90% or more, the crystallinity of a resin is improved due to a high stereoregular component, and high thermal stability and mechanical strength are obtained. On the other hand, by adjusting the mesopentad fraction [mmmm] to preferably 98% or less, stretchability becomes good.

A high temperature NMR apparatus for measuring the above-mentioned mesopentad fraction ([mmmm]) is not particularly limited, and a generally commercially available high temperature-type nuclear magnetic resonance (NMR) apparatus which can measure stereoregularity of polyolefins, for example, a high temperature-type Fourier transform nuclear magnetic resonance apparatus (high temperature FT-NMR) JNM-ECP500 manufactured by JEOL Ltd. can be used. An observation nucleus is $^{13}$C (125 MHz), a measurement temperature is 135°C, and as a solvent, ortho-dichlorobenzene (mixed solvent of ODCB : ODCB and deuterated ODCB (volumetric mixing ratio = 4/1)) is used. A method by high temperature NMR can be conducted by a known method, for example, the method described in "Polymer Analysis Handbook, New Edition, edited by Research Committee of Polymer Analysis, The Japan Society for Analytical Chemistry, KINOKUNIYA COMPANY LTD., 1995, page 610". A measurement mode is as follows: single-pulse proton broad-band decoupling, pulse width 9.1 $\mu$sec (45° pulse), pulse interval 5.5 sec, integration times 4,500, and shift standard of $CH_3$ (mmmm) = 21.7 ppm.

The pentad fraction representing stereoregularity is calculated as percentage by an intensity integrated value of each signal derived from a combination (mmmm, mrrm or the like) of 5-ads (pentads) of the same-directionally arranging-ads "meso (m)" and the different-directionally arranging-ads "racemo (r)". Regarding assignment of each signal derived from mmmm, mrrm or the like, for example, the description of spectra in "T. Hayashi et al., Polymer, volume 29, page 138 (1988)" or the like can be referred to. The above-mentioned mesopentad fraction ([mmmm]) can be controlled by appropriately adjusting the polymerization condition of a polypropylene resin, or polymerization conditions such as a kind of a catalyst and an amount of a catalyst.

As the crystalline propylene homopolymer, a crystalline propylene homopolymer produced by a known method, for example, a method of polymerizing propylene in a hydrocarbon solvent using a Ziegler catalyst system including a titanium-aluminum compound, a method of polymerization in liquid propylene (bulk polymerization), a method of polymerization in a gaseous phase or the like can be used. Alternatively, a commercially available product can also be used. Examples of a representative commercially available product include homopolymers among Prime Polypro (registered trademark) Series manufactured by Prime Polymer Co., Ltd., PC412A and the like manufactured by SunAllomer Ltd., homopolymers among NOVATEC (registered trademark) Series manufactured by Japan Polypropylene Corporation, Daploy Series manufactured by Borealis AG, 5014L Series manufactured by Korea Petrochemical Industry Corporation, homopolymers among Sumitomo NOBLEN (registered trademark) Series manufactured by Sumitomo Chemical Co., Ltd., and the like.

As a crystalline copolymer of propylene and ethylene, both a random copolymer of propylene and ethylene and a block copolymer of propylene and ethylene are preferably used, and a copolymer containing 50% by mass or less of ethylene therein is more preferable. Examples of a representative commercially available product include copolymers among Prime Polypro (registered trademark) Series manufactured by Prime Polymer Co., Ltd., copolymers among NOVATEC (registered trademark) Series as well as WINTEC (registered trademark) Series manufactured by Japan Polypropylene Corporation, copolymers among Sumitomo NOBLEN (registered trademark) Series manufactured by Sumitomo Chemical Co., Ltd., and the like.

Examples of the crystalline polyamide-based resin include ring-opening polymerization-based aliphatic polyamide, an amide-based elastomer, and the like, and for example, those having a melting point in a range of 120 to 175°C among nylon 12 (PA12) can be used. The crystalline polyamide-based resins can be used alone or by mixing two or more of them.

Examples of the crystalline acetal-based resin include homopolymers of polyoxymethylene resin, polyoxyethylene resin or the like; copolymers thereof; and the like. The crystalline acetal-based resins can be used alone or by mixing two or more of them.

The crystalline resin A can be used in an amount of preferably 60% by mass or more, more preferably 65% by mass or more, further preferably 75% by mass of more, and particularly preferably 85% by mass or more, based on the total mass of the resin components contained in the base material layer. Additionally, the crystalline resin A can be used in an amount of preferably 98% by mass or less, more preferably 97.5% by mass or less, further preferably 96% by mass or less, further still more preferably 94% by mass or less, and particularly preferably 93% by mass or less, based on the total mass of the resin components contained in the base material layer. For example, when the base material layer includes two or more layers containing the crystalline resin A and the amorphous resin B, it is preferable that, in each layer, the amount (% by mass) of the crystalline resin A is within the above-mentioned range, based on the total mass of the resin components contained in the layers containing the above-mentioned crystalline resin A and amorphous resin B. By including the crystalline resin A in the above-mentioned range, it is easy to obtain a film excellent in stretchability and mechanical strength.

Next, the amorphous resin B will be described. The amorphous resin B is a resin in which a melting point is not identified but a glass transition temperature is identified in the above-mentioned DSC measurement. The amorphous resin B has a glass transition temperature of preferably 220°C or lower, more preferably 190°C or lower, further preferably 185°C or lower, further still more preferably 180°C or lower, especially preferably 174°C or lower, and particularly still more preferably 164°C or lower. Additionally, the amorphous resin B has a glass transition temperature of preferably 40°C or higher, more preferably 50°C or higher, further preferably 135°C or higher, further still more preferably 140°C or higher, especially preferably 144°C or higher, and particularly still more preferably 148°C or higher.

When the glass transition temperature of the amorphous resin B is within the above-mentioned range, since a more moderate gap part can be formed at the interface between the crystalline resin A and the amorphous resin B during stretching of the film, this is preferable. In the present invention, the glass transition temperature of the amorphous resin B has been measured using input compensation type DSC, Diamond DSC, manufactured by PerkinElmer, Inc.

When the amorphous resin B has a melt mass flow rate at 260°C and 2.16 kg of preferably 1 to 15 g/10 min., more preferably 2 to 13 g/10 min., and further preferably 3 to 11 g/10 min., the amorphous resin B is excellent in miscibility and dispersibility with the crystalline resin A, and it is easy to obtain translucency in a range of a desired total light transmittance, and thus, this is preferable. In the present invention, the melt mass flow rate of the amorphous resin B has been measured using a melt indexer manufactured by Toyo Seiki Seisaku-sho, Ltd. in accordance with JIS K 7210:1999.

Examples of the amorphous resin B include amorphous cyclic olefin copolymers such as a copolymer of cyclic olefin and straight olefin, a copolymerized polyester-based resin, straight, branched or cyclic polyolefin-based resins such as polyethylene, polypropylene, polybutene, polymethylpentene, and cyclopentadiene, a polyamide-based resin, a polyimide-based resin, a polyether-based resin, a polyester amide-based resin, a polyether ester-based resin, an acrylic-based resin, a polyurethane-based resin, a polycarbonate-based resin, a polyvinyl chloride-based resin, polyacrylonitrile, polyphenylene sulfide, polystyrene, a fluorine-based resin, and the like. Among them, an amorphous cyclic olefin copolymer, a copolymerized polyester-based resin, a polyolefin-based resin, a polyamide-based resin, an acrylic-based resin, a mixture thereof or the like is preferable because the kind of the monomer to be copolymerized is diversified and it is easy to adjust material physical properties depending on the kind of the monomer. Particularly, when an amorphous cyclic olefin copolymer is used, since a moderate gap part is easily formed and a suitable total light transmittance is obtained, this is preferable. Although the reason therefor is not necessarily clear, it is presumed that since the amorphous cyclic olefin copolymer has a small density ratio between the melt density and the solid density, and the resin contractility in a process from melt extrusion to cooling is greatly different from the resin contractility of the crystalline resin A, a moderate gap part is easily formed and as a result, a suitable total light transmittance is easily obtained.

As the amorphous resin B, these resins may be used alone, or two or more kinds of the amorphous resin B can also be used concurrently.

The amorphous cyclic olefin copolymer is a copolymer including at least one cyclic olefin selected from the group consisting of cycloalkene, bicycloalkene, tricycloalkene, and tetracycloalkene, and a straight olefin such as ethylene or propylene.

Examples of the cyclic olefin include bicyclo[2.2.1]hept-2-ene, 6-methylbicyclo[2.2.1]hept-2-ene, 5,6-dimethylbicyclo[2.2.1]hept-2-ene, 1-methylbicyclo[2.2.1]hept-2-ene, 6-ethylbicyclo[2.2.1]hept-2-ene, 6-n-butylbicyc-

7

lo[2.2.1]hept-2-ene, 6-i-butylbicyclo[2.2.1]hept-2-ene, 7-methylbicyclo[2.2.1]hept-2-ene, tricyclo[4.3.0.12.5]-3-decene, 2-methyl-tricyclo[4.3.0.12.5]-3-decene, 5-methyl-tricyclo[4.3.0.12.5]-3-decene, tricyclo[4.4.0.12.5]-3-decene, 10-methyl-tricyclo[4.4.0.12.5]-3-decene, tetracyclo[4.4.0.12,5.17,10]dodec-3-ene, and derivatives thereof, and the like.

The glass transition temperature of the amorphous cyclic olefin copolymer can be adjusted within the above-mentioned range, for example, by increasing the content of a cyclic olefin component in the cyclic olefin copolymer and decreasing the content of a straight olefin component such as ethylene. Preferably, the content of the cyclic olefin component is 70 to 90% by mass, and the content of the straight olefin component such as ethylene is 30 to 10% by mass. More preferably, the content of the cyclic olefin component is 75 to 85% by mass, and the content of the straight olefin component such as ethylene is 25 to 15% by mass. Further preferably, the content of the cyclic olefin component is 77 to 83% by mass, and the content of the straight olefin component such as ethylene is 23 to 17% by mass.

As the cyclic olefin, from the viewpoint of productivity, transparency, and easy rise in Tg, bicyclo[2.2.1]hept-2-ene (also referred to as bicyclo[2.2.1]hept-2-ene or norbornene) and derivatives thereof, and tetracyclo[4.4.0.12,5.17,10]dodec-3-ene (also referred to as tetracyclododecene) and derivatives thereof are preferable. As the straight olefin component, from the viewpoint of reactivity, at least one selected from the group consisting of ethylene, propylene, and 1-butene is preferable, and ethylene is more preferable.

Moreover, in addition to the cyclic olefin and the straight olefin, as necessary, other copolymerizable unsaturated monomer components can also be copolymerized as long as the object of the present invention is not impaired. Such other copolymerizable unsaturated monomers may act as a molecular weight adjusting agent, and examples thereof include α-olefins having 3 to 20 carbon atoms such as propylene, 1-butene, 4-methyl-1-pentene, 1-hexene, 1-octene, 1-decene, 1-dodecene, 1-tetradecene, 1-hexadecene, 1-octadecene, and 1-eicosen, cyclopentene, cyclohexene, 3-methylcyclohexene, cyclooctene, 1,4-hexadiene, 4-methyl-1,4-hexadiene, 5-methyl-1,4-hexadiene, 1,7-octadiene, dicyclopentadiene, 5-ethylidene-2-norbornene, 5-vinyl-2-norbornene, tetracyclododecene, 2-methyltetracyclododecene, 2-ethyltetracyclododecene, and the like.

Furthermore, as the amorphous resin B, a hydrogenated product of the amorphous cyclic olefin copolymer can also be used. Since improved heat deterioration resistance and weather deterioration resistance are obtained, a hydrogenated product in which almost all double bonds are saturated by hydrogenation is preferable. The hydrogenated product has a hydrogenation rate of preferably 90% or more, and more preferably 99% or more.

As the amorphous resin B, a commercially available resin may be used. Examples of a representative commercially available product include TOPAS (registered trademark) 6015S-04, 6017S-04, 6013M-07, and the like manufactured by Topas Advanced Polymers GmbH; APEL (registered trademark) APL6015T manufactured by Mitsui Chemicals, Inc.; JSRARTON (registered trademark) F4520 manufactured by JSR Corporation; and the like.

The amorphous resin B can be used at an amount of preferably 2% by mass or more, more preferably 2.5% by mass or more, further preferably 4% by mass or more, further still more preferably 5% by mass or more, especially preferably 6% by mass or more, and particularly still more preferably 7% by mass or more, based on the total mass of the resin components contained in the base material layer. Additionally, the amorphous resin B can be used at an amount of preferably 40% by mass or less, more preferably 35% by mass or less, further preferably 25% by mass or less, and particularly preferably 15% by mass or less, based on the total mass of the resin components contained in the base material layer. The content of the amorphous resin B of 2.1 parts by mass or more, 2.5 parts by mass or more, 3 parts by mass or more, 4 parts by mass or more, 6.5 parts by mass or more, 7.5 parts by mass or more or the like, based on 100 parts by mass of the crystalline resin A, is a preferable aspect, and the content of the amorphous resin B of 67 parts by mass or less, 54 parts by mass or less, 33 parts by mass or less, 18 parts by mass or less or the like, based on 100 parts by mass of the crystalline resin A, is a preferable aspect. By using the amorphous resin B in the above-mentioned range, it is easy to obtain a desired total light transmittance and the ununiformity of whiteness like texture of paper.

The base material layer constituting the translucent stretched film 1 of the present invention can contain, as resin components, two components of the crystalline resin A and the amorphous resin B. Additionally, the base material layer constituting the translucent stretched film 1 of the present invention can further contain, as a resin component, a crystalline thermoplastic resin C having a melting point of 200 to 280°C (hereinafter, referred to as crystalline resin C), in addition to the crystalline resin A and the amorphous resin B (that is, the content of the crystalline resin C may be 0% by mass or may exceed 0% by mass, based on the total mass of the resin components contained in the base material layer). When the base material layer of the translucent stretched film 1 of the present invention contains the crystalline resin C in addition to the crystalline resin A and the amorphous resin B, it is further easy to obtain the ununiformity of whiteness like texture of paper, and as a result, the film is easily used as a substitute for paper. When the base material layer of the translucent stretched film 1 of the present invention does not contain the crystalline resin C, this is a preferable aspect from the viewpoint of total light transmittance (translucency), printability, and pencil writability.

The crystalline resin C has a melting point of preferably 200 to 280°C, more preferably 230 to 270°C, and further preferably 240 to 260°C. When the crystalline resin C having a melting point within the above-mentioned range is used, since it is easy to control the size of the finely divided dispersion of the crystalline resin C in the crystalline resin A during melt extrusion and deformation of the crystalline resin C is moderately suppressed, the total light transmittance of the resulting stretched film is reduced, and this makes it easy to obtain a stretched film having a desired translucency, and accordingly, this is preferable.

The crystalline resin C has a glass transition temperature of preferably 20 to 130°C, more preferably 60 to 120°C, and further preferably 80 to 110°C. When the glass transition temperature of the crystalline resin C having a melting point within the above-mentioned range is used, since a moderate gap part can be formed at the interface between the crystalline resin A, the amorphous resin B, and the crystalline resin C during stretching of the film when each of the crystalline resin A and the amorphous resin B has a specific glass transition temperature as described above, this is preferable. Furthermore, since the productivity of the stretched film and the heat resistance, flexibility, low temperature brittleness, and the like of the resulting stretched film become satisfactory, the above-mentioned specific glass transition temperature is preferable.

In the present invention, the melting point and glass transition temperature of the crystalline resin C have been measured using input compensation type DSC, Diamond DSC, manufactured by PerkinElmer, Inc.

The crystalline resin C has a melt mass flow rate at 300°C and 1.2 kg or 260°C and 5 kg of preferably 1 to 60 g/10 min., more preferably 1 to 40 g/10 min., further preferably 5 to 35 g/10 min., and particularly preferably 10 to 20 g/10 min. When the melt mass flow rate is within the above-mentioned range, miscibility and dispersibility with the crystalline resin A and the amorphous resin B are excellent, and it is easy to obtain translucency in a range of a desired total light transmittance, and thus, this is preferable. In the present invention, the melt mass flow rate of the crystalline resin C has been measured using a melt indexer manufactured by Toyo Seiki Seisaku-sho, Ltd., in accordance with JIS K 7210:1999.

The crystalline resin C is not particularly limited as long as it is a crystalline thermoplastic resin C having a melting point of 200 to 280°C, and examples thereof include those having a melting point of 200 to 280°C among a crystalline polystyrene-based resin, a crystalline polycarbonate-based resin, a polyphenylene sulfide resin, a polymethylpentene resin (resin containing 4-methylpentene-1 as a main constituent unit), a crystalline polyamide-based resin, and a crystalline polyester-based resin, and the like. Among them, a crystalline polyester-based resin, a polymethylpentene resin, a crystalline polystyrene-based resin and the like having a melting point of 200 to 280°C are preferable because dispersibility into the crystalline resin A is moderate, a total light transmittance is easily controlled to a desired transmittance, and resistance to water, an acid, an alkali, a salt, and the like is excellent, and thus, the resulting film is easily used for a food packaging application and the like.

Particularly, when a crystalline polystyrene-based resin is used, since a suitable total light transmittance is obtained, this is preferable. Although the reason therefor is not necessarily clear, it is presumed that since the crystalline polystyrene-based resin has generally a specific gravity of 1.05 or less that is not so high while being a resin having the above-mentioned preferable melting point and, preferably, the above-mentioned glass transition temperature, the volume of the crystalline polystyrene-based resin in the crystalline resin A and the amorphous resin B becomes moderately large, and as a result, a suitable total light transmittance is easily obtained.

As the crystalline resin C, the above-mentioned resins may be used alone or two or more kinds of the crystalline resin C can also be used concurrently. By using two or more kinds of the crystalline resin C concurrently, variation is apt to occur in the size of the finely divided dispersion of the crystalline resin C in the crystalline resin A and the size of the gap part generated at the interface between the crystalline resin A, the amorphous resin B, and the crystalline resin C, and as a result, it is easy to obtain the ununiformity of whiteness like texture of paper.

Examples of the crystalline polycarbonate-based resin include polycarbonate-based resins including a repetition unit represented by the formula [-O-Ph-C(CH$_3$)$_2$-Ph-O-C(=O)-], in which a melting point is observed in the above-mentioned DSC measurement. Herein, Ph represents a divalent phenylene group (-C$_6$H$_4$-).

Examples of the crystalline polyamide-based resin include a ring-opening polymerization-based aliphatic polyamide, a polycondensation-based polyamide, a semi-aromatic polyamide, an amide-based elastomer, and the like. A so-called nylon 66 (PA66) resin synthesized by polycondensation reaction between hexamethylenediamine and adipic acid has a moderate melting point and also has translucency in a range of a desired total light transmittance, so that the resin is preferable. Alternatively, nylon 6 (PA6) and the like can also be used.

A polyphenylene sulfide resin having a specific gravity measured in accordance with ASTM-D792 of preferably 1.4 or less and a tensile modulus of elasticity measured in accordance with ASTM-D638 of preferably 3.5 GPa or less easily provides translucency in a range of a desired total light transmittance.

A polymethylpentene resin having a tensile modulus of elasticity measured at 23°C in accordance with ASTM-D638 of preferably 1.8 GPa or more and a Vicat softening temperature measured in accordance with ASTM-D1525 of preferably 165°C or higher, and more preferably 170°C or higher is preferable, because translucency in a range of a desired total light transmittance is easily obtained. Examples of a representative commercially available product of the polymethylpentene resin include TPX (registered trademark) DX845, DX231, DX820, RT18, and RT31 manufactured by Mitsui Chemicals, Inc., and the like.

Examples of the crystalline polyester-based resin include polyethylene terephthalate, polyethylene naphthalate, polybutylene terephthalate, polybutylene naphthalate, polytrimethylene terephthalate, polytrimethylene naphthalate, polycyclohexanedimethylene terephthalate, and the like. The crystalline polyester-based resins can be used alone or by mixing two or more of them. Inter alia, a crystalline polyester-based resin is preferable in which among copolymerization components thereof, an acid component contains terephthalic acid as a main component and a diol component contains ethylene glycol as a main component. Terephthalic acid and ethylene glycol which are main components are contained in the acid component and the diol component at a ratio of 51 mol% or more, preferably 70 mol% or more, and further preferably 80 mol% or more, respectively. Additionally, the crystalline polyester-based resin may contain 49 mol% or less, preferably 30 mol% or less, further preferably 20 mol% or less of other copolymerization components in the acid component and/or the diol component.

Examples of the above-mentioned copolymerizable other acid components include aromatic dicarboxylic acids such as isophthalic acid, 2-chloroterephthalic acid, 2,5-dichloroterephthalic acid, 2-methylterephthalic acid, 4,4-stilbenedicarboxylic acid, 4,4-biphenyldicarboxylic acid, orthophthalic acid, 2,6-naphthalenedicarboxylic acid, 2,7-naphthalenedicarboxylic acid, bisbenzoic acid, bis(p-carboxyphenyl)methane, anthracenedicarboxylic acid, 4,4-diphenyl ether dicarboxylic acid, 4,4-diphenoxyethanedicarboxylic acid, sodium 5-sulfoisophthalate, and ethylene-bis-p-benzoic acid; aliphatic dicarboxylic acids such as adipic acid, sebacic acid, azelaic acid, dodecanedioic acid, 1,3-cyclohexanedicarboxylic acid, and 1,4-cyclohexanedicarboxylic acid; and the like. Among them, aromatic dicarboxylic acid such as isophthalic acid and 2,6-naphthalenedicarboxylic acid is preferable.

Additionally, examples of the above-mentioned copolymerizable other diol components include diols such as diethylene glycol, 1,2-propylene glycol, 1,3-propanediol, 2,2-dimethyl-1,3-propanediol, trans-tetramethyl-1,3-cyclobutanediol, 2,2,4,4-tetramethyl-1,3-cyclobutanediol, 1,4-butanediol, neopentyl glycol, 1,5-pentanediol, 1,6-hexanediol, 1,4-cyclohexanedimethanol, 1,3-cyclohexanedimethanol, decamethylene glycol, 1,4-cyclohexanediol, 1,3-cyclohexanediol, spiroglycol, p-xylenediol, bisphenol A, tetrabromobisphenol A, and tetrabromobisphenol A-bis(2-hydroxyethyl ether); and the like. Among them, diethylene glycol and 1,3-propanediol are preferable.

These crystalline polyester-based resins may be used alone or by mixing two or more of them. Examples of a commercially available product of the crystalline polyester-based resin include NOVAPEX (registered trademark) Series manufactured by Mitsubishi Chemical Corporation, TR-8550FF manufactured by Teijin Limited, and the like.

The structure of the crystalline polystyrene-based resin may be either an isotactic structure or a syndiotactic structure, and it is preferable to use a crystalline polystyrene-based resin having a syndiotactic structure. In the present invention, the syndiotactic structure refers to a structure in which a steric chemical structure is a syndiotactic structure, that is, a structure having a steric structure in which phenyl groups and substituted phenyl groups being a side chain to a main chain formed from carbon-carbon bonds are alternately positioned in opposite directions.

The tacticity of the crystalline polystyrene-based resin can be quantitated by a nuclear magnetic resonance method with isotope carbon ($^{13}$C-NMR method). The tacticity measured by the $^{13}$C-NMR method can be indicated by the existence ratio of a plurality of continuous structural units, for example, by a diad in the case of two units, a triad in the case of three units, and a pentad in the case of five units. The polystyrene-based resin B used in the present invention is usually a styrene-based polymer having a syndiotacticity that the ratio of a racemic diad is 75% or more, preferably 85% or more, or the ratio of a racemic triad is 60% or more, preferably 75% or more, or the ratio of a racemic pentad is 30% or more, preferably 50% or more.

Examples of the kind of the crystalline polystyrene-based resin include a styrene homopolymer (polystyrene), poly(alkylstyrene), poly(halogenated styrene), poly(halogenated alkylstyrene), poly(alkoxystyrene), poly(vinyl benzoate ester), hydrogenated polymers thereof and mixtures thereof, as well as copolymers containing them as a main component.

Examples of the poly(alkylstyrene) include poly(methylstyrene), poly(ethylstyrene), poly(isopropylstyrene), poly(tertiary-butylstyrene), poly(phenylstyrene), poly(vinylnaphthalene), poly(vinylstyrene), and the like. Examples of the poly(halogenated styrene) include poly(chlorostyrene), poly(bromostyrene), poly(fluorostyrene), and the like. Examples of the poly(halogenated alkylstyrene) include poly(chloromethylstyrene) and the like. Examples of the poly(alkoxystyrene) include poly(methoxystyrene), poly(ethoxystyrene), and the like.

Examples of a comonomer component of the copolymer including these structural units include, other than the monomers of the above-mentioned styrene-based polymer, olefin monomers such as ethylene, propylene, butene, hexene, and octene; diene monomers such as butadiene and isoprene; cyclic olefin monomers; cyclic diene monomers; and polar vinyl monomers such as methyl methacrylate, maleic anhydride, and acrylonitrile. Examples of the preferable styrene-based polymer include polystyrene, poly(p-methylstyrene), poly(m-methylstyrene), poly(p-tertiary-butylstyrene), poly(p-chlorostyrene), poly(m-chlorostyrene), poly(p-fluorostyrene), hydrogenated polystyrene, and a copolymer including these structural units. Specific examples of the copolymer include a styrene-butyl acrylate copolymer, a styrene-conjugated diene block copolymer, a hydrogenated product of a styrene-conjugated diene block copolymer, and the like, and these may be used alone or by mixing two or more of them. Examples of the above-mentioned conjugated diene include butadiene, isoprene, 1,3-pentadiene, 2,3-dimethyl-1,3-butadiene, and the like.

As the crystalline polystyrene-based resin, a resin obtained by copolymerizing at least styrene and p-methylstyrene as a styrene-based monomer is preferable, and the content of p-methylstyrene in the styrene-based monomer is preferably 1 to 30 mol%, and more preferably 3 to 15 mol%. By adjusting the content of p-methylstyrene in the styrene-based monomer to the above-mentioned range, it is easy to control the size of the finely divided dispersion of the polystyrene-based resin in the crystalline resin A. For that reason, the total light transmittance of a stretched film can be lowered into a desired range. Furthermore, the flexibility of the film becomes suitable and the stretchability also becomes good, so that rupture or the like hardly occurs.

The crystalline polystyrene-based resin used in the present invention has a weight average molecular weight of preferably 10,000 or more, and more preferably 50,000 or more, although the weight average molecular weight is not particularly limited. By adjusting the weight average molecular weight to 10,000 or more, the thermal property and mechanical strength of the resulting stretched film can be improved. Additionally, the upper limit of the weight average molecular weight of the polystyrene-based resin used in the present invention is preferably 3,000,000, and more preferably 1,500,000, from the viewpoint of miscibility and dispersibility with the crystalline resin A.

The crystalline polystyrene-based resin has a melt mass flow rate measured at 300°C and 1.2 kg in accordance with JIS K 7210:1999 of preferably 1 to 40 g/10 min., and more preferably 10 to 35 g/10 min. By adjusting the melt mass flow rate to the above-mentioned range, it is easy to control the size of the finely divided dispersion of the crystalline resin C in the crystalline resin A. For that reason, it is easy to obtain a desired total light transmittance.

In the present invention, a crystalline polystyrene-based resin produced by a known method, for example, a method of polymerizing styrene as a monomer with use of a metallocene catalyst or the like may be used, or a commercially available crystalline polystyrene-based resin may be used. Examples of a representative commercially available product include XAREC (registered trademark) 142ZE, XAREC (registered trademark) 300ZC, XAREC (registered trademark) 130ZC, and XAREC (registered trademark) 90ZC manufactured by Idemitsu Kosan Co., Ltd., and the like. These crystalline polystyrene-based resins may be used alone or by mixing two or more of them.

When the crystalline thermoplastic resin C is used in the base material layer, the total of the contents of the amorphous thermoplastic resin B and the crystalline thermoplastic resin C is preferably 4 to 35% by mass, more preferably 5 to 25% by mass, further preferably 6 to 20% by mass, particularly preferably 7 to 15% by mass, and especially preferably 10 to 15% by mass, based on the total mass of the resin components of the base material layer. When the total of the contents of the amorphous thermoplastic resin B and the crystalline thermoplastic resin C is within the above-mentioned range, it is easy to obtain a desired total light transmittance and the ununiformity of whiteness like texture of paper, stretchability can be improved, and generation of rupture and the like can be suppressed.

The base material layer may contain, in addition to the crystalline resin A, the amorphous resin B, and the crystalline resin C, a crystalline resin and/or an amorphous resin having a melting point and a glass transition temperature different from those of the crystalline resin A, the amorphous resin B, and the crystalline resin C (hereinafter, also referred to as other resin R) as resin components in such a range that the effect of the present invention is not impaired, for the purpose of adjusting stretchability, adjusting low temperature impact resistance, adjusting surface roughness, adjusting various physical properties such as rigidity, strength, and elongation, or the like.

The other resin R is not particularly limited, and a previously known resin which is suitable in a stretched film application can also be appropriately used in the present invention. Examples of the other resin R include polyolefin-based resins such as polyethylene, polypropylene, poly(1-butene), polyisobutene, poly(1-pentene), and polymethylpentene, and copolymer resins thereof such as copolymers of α-olefins including an ethylene-propylene copolymer, a propylene-butene copolymer, and an ethylene-butene copolymer. Furthermore, examples of the other resin R include a styrene-based resin, a vinyl-based resin, a polyester-based resin, a polyurethane-based resin, a nylon-based resin, and copolymers thereof such as vinyl monomer-diene monomer copolymers including a styrene-butadiene copolymer, vinyl monomer-diene monomer-vinyl monomer copolymers including a styrene-butadiene-styrene copolymer, and the like.

When the base material layer contains the other resin R, the content of the other resin R is preferably 15% by mass or less, and more preferably 10% by mass or less, based on the total mass of the resin components contained in the base material layer. The lower limit value of the content of the other resin R is not particularly limited, and is, for example, 0% by mass, 1% by mass or the like.

The base material layer may contain, as necessary, an additive as an optional component in addition to the resin components. Examples of the additive include a heat stabilizer, an antioxidant, an organic or inorganic lubricant, a chlorine trapping agent, an antistatic agent, and the like. The additive can be used in an amount in such a range that the effect of the present invention is not impaired.

In addition, as described above, the translucent stretched film of the present invention has texture of paper even when it does not contain an inorganic substance such as calcium carbonate. Hence, it is preferable that the amount of the inorganic substance in the base material layer is 1% by mass or less, 0.5 % by mass or less, 0.1% by mass or less, 0.01% by mass or less, 0% by mass (the inorganic substance is not contained) or the like of the total mass of the base material layer so that the above-mentioned characteristics of the present invention are not hindered.

Examples of the heat stabilizer and the antioxidant include phenol-based, hindered amine-based, phosphite-based, lactone-based, and tocopherol-based heat stabilizers and antioxidants. Further specific examples thereof include dibutylhydroxytoluene, pentaerythritol tetrakis[3-(3,5-di-t-butyl-4-hydroxyphenyl)propionate] ("Irganox (registered trademark) 1010" manufactured by BASF Japan Ltd.), 1,3,5-trimethyl-2,4,6-tris(3,5-di-t-butyl-4-hydroxy)benzene ("Irganox (registered trademark) 1330" manufactured by BASF Japan Ltd.), tris(2,4-di-t-butylphenyl) phosphite ("Irgafos (registered trademark) 168" manufactured by BASF Japan Ltd.), and the like. Among them, at least one selected from phenol-based antioxidants or a combination thereof, a combination of a phenol-based one and a phosphite-based one, a combination of a phenol-based one and a lactone-based one, and a combination of a phenol-based one, a phosphite-based one, and a lactone-based one are preferable from the viewpoint of imparting chemical stability to the film.

Examples of the lubricant include an organic lubricant and an inorganic lubricant. Examples of the organic lubricant include aliphatic amides such as stearic acid amide and erucic acid amide, lauric acid diethanolamide, alkyl diethanolamine, aliphatic monoglyceride, aliphatic diglyceride, and a silicone crosslinked polymer. Examples of the inorganic lubricant include silica, alumina, and the like. The organic lubricant is preferable in printing application in that since transfer of the lubricant to a printing plate is small, the printing plate is hardly stained.

Examples of the chlorine trapping agent include calcium stearate, metal soaps, hydrotalcite, and the like.

Examples of the antistatic agent include alkyl methyl dibetaine, alkyl amine diethanol, alkyl amine ethanol ester, alkyl amine diethanol diester, and the like. Among them, two or more antistatic agents may be used concurrently, and further, an aliphatic alcohol may be used together.

Among them, when a stearyldiethanolamine monostearate ester and stearyldiethanolamine are used concurrently, since antistatic performance is excellent and printability is improved, this is preferable.

Examples of a representative commercially available product of the antistatic agent include Electrostripper Series manufactured by Kao Corporation, and the like.

[Surface Layer]

Next, a surface layer will be described. The translucent stretched film 1 of the present invention includes a surface layer. The surface layer contains, as a resin component, at least a crystalline thermoplastic resin D having a melt mass flow rate at 190°C and 2.16 kg of 0.02 to 2 g/10 min. (hereinafter, referred to as crystalline resin D). In the present invention, the melt mass flow rate of the crystalline resin D has been measured using a melt indexer manufactured by Toyo Seiki Seisaku-sho, Ltd., in accordance with JIS K 7210:1999.

The crystalline resin D has a melt mass flow rate at 190°C and 2.16 kg of 0.02 to 2 g/10 min., preferably 0.02 to 1.5 g/10 min., more preferably 0.02 to 1 g/10 min., further preferably 0.03 to 0.5 g/10 min., and particularly preferably 0.03 to 0.1 g/10 min. When the crystalline resin D has a melt mass flow rate at 190°C and 2.16 kg of less than 0.02 g/10 min., fish eyes are generated to deteriorate an appearance of the film. On the other hand, when the melt mass flow rate at 190°C and 2.16 kg exceeds 2 g/10 min., roughening becomes insufficient and as a result, a moderate delustered appearance is not obtained. In addition, the concurrent use of a crystalline resin D having a melt mass flow rate at 190°C and 2.16 kg of 0.02 to 0.1 g/10 min. and a crystalline resin D having a melt mass flow rate at 190°C and 2.16 kg of 0.11 to 1.5 g/10 min. is a preferable aspect from the viewpoint of printability and pencil writability, and the concurrent use of a crystalline resin D having a melt mass flow rate at 190°C and 2.16 kg of 0.03 to 0.1 g/10 min. and a crystalline resin D having a melt mass flow rate at 190°C and 2.16 kg of 0.11 to 1 g/ 10 min. is a more preferable aspect.

The crystalline resin D has a melting point of preferably 100°C to 160°C, although the melting point is not particularly limited.

Examples of the crystalline resin D include a crystalline polyethylene-based resin, a crystalline polypropylene-based resin, a crystalline polystyrene-based resin, and the like, and these can be used alone or by mixing two or more of them. Among them, a crystalline polyethylene-based resin is preferably used as the crystalline resin D, and the crystalline resin D is more preferably a crystalline polyethylene-based resin from the viewpoint of printability and pencil writability. As the above-mentioned crystalline polyethylene-based resin, at least one selected from the group consisting of a high density polyethylene (HDPE), a medium density polyethylene (MDPE), and a low density polyethylene (LDPE) is preferable, at least one selected from the group consisting of a high density polyethylene and a low density polyethylene is more preferable, and the concurrent use of two kinds of a high density polyethylene and a low density polyethylene is further preferable. By using these two kinds concurrently, glossiness and printability are easily improved, and this is preferable. Herein, the high density polyethylene refers to a polyethylene having a density of 0.942 g·cm$^{-3}$ or more (preferably, polyethylene having a density of 0.942 g·cm$^{-3}$ or more and 0.965 g·cm$^{-3}$ or less), the medium density polyethylene refers to a polyethylene having a density of 0.930 g·cm$^{-3}$ or more and less than 0.942 g·cm$^{-3}$ (preferably, polyethylene having a density of 0.930 g·cm$^{-3}$ or more and 0.941 g·cm$^{-3}$ or less), and the low density polyethylene refers to a polyethylene having a density of 0.910 g·cm$^{-3}$ or more and less than 0.930 g·cm$^{-3}$ (preferably, polyethylene having a density of 0.910 g·cm$^{-3}$ or more and 0.929 g·cm$^{-3}$ or less). In the present specification, the low density polyethylene includes a straight low density polyethylene. The straight low density polyethylene is a copolymer of ethylene and one or more α-olefins selected from α-olefins having 3 to 20 carbon atoms, and examples of the α-olefins having 3 to 20 carbon atoms include propylene, 1-butene, 1-pentene, 4-methyl-1-pentene, 1-hexene, 1-octene, 1-decene, 1-dodecene, and the like. As the straight low density polyethylene, a metallocene-catalyzed straight low density polyethylene may be used that is polymerized with a metallocene catalyst and has a sharp molecular weight distribution as compared with a conventional catalyst (Ziegler-Natta catalyst).

As the crystalline resin D, a commercially available resin may be used. Examples of a representative commercially available product include HIZEX (registered trademark) 7000F, HIZEX (registered trademark) 3300F manufactured by Prime Polymer Co., Ltd.; NOVATEC (registered trademark) HF111K, NOVATEC (registered trademark) HE30, NOVATEC (registered trademark) LF280 manufactured by Japan Polypropylene Corporation; and the like.

The surface layer may further contain, as a resin component, a crystalline thermoplastic resin A' (hereinafter, also referred to as crystalline resin A') in addition to the crystalline resin D. When the surface layer contains the crystalline resin A', the flowability of the resin components is improved, and the film of the present invention having an appearance like paper and a stable thickness can be more suitably obtained. Examples of the crystalline resin A' include resins similar to the crystalline resin A which can be used in the base material layer. In the crystalline thermoplastic resin A', all specific descriptions for (i) kind of resin component, (ii) melt mass flow rate, (iii) melting point, (iv) glass transition temperature, (v) preferable aspects of the above-mentioned (i) to (iv), and the like are similar to the above-mentioned (i) to (v) and the like of the crystalline resin A, all of which have been described above in the description of the base material layer. For that reason, herein, the description including the above-mentioned (i) to (v) and the like of the crystalline thermoplastic resin A' will be omitted. The crystalline thermoplastic resin A' may be used alone or two or more resin components may be used in combination. As the crystalline resin A' used in the surface layer and the crystalline resin A used in the base material layer, the same kind of resins may be used in combination or different kinds of resins may be used.

Furthermore, the surface layer can also contain, in addition to the crystalline resin D (and optionally, the crystalline resin A'), an amorphous thermoplastic resin B' (hereinafter, also referred to as amorphous resin B') and/or a crystalline thermoplastic resin C' (hereinafter, also referred to as crystalline resin C') as resin components. When the amorphous resin B' and/or the crystalline resin C' are(is) contained as resin components of the surface layer, a desired total light transmittance and the ununiformity of whiteness like texture of paper are more suitably obtained. Examples of the amorphous resin B' and the crystalline resin C' include resins similar to the amorphous resin B and the crystalline resin C which can be used in the base material layer, respectively. In the amorphous resin B' and the crystalline resin C', all specific descriptions for (i) kind of resin component, (ii) melt mass flow rate, (iii) melting point (in the case of the crystalline resin C'), (iv) glass transition temperature, (v) preferable aspects of the above-mentioned (i) to (iv), and the like are similar to the above-mentioned (i) to (v) and the like of the amorphous resin B and the crystalline resin C, all of which have been described above in the description of the base material layer. For that reason, herein, the description including the above-mentioned (i) to (v) and the like of the amorphous resin B' and the crystalline resin C' will be omitted. The amorphous resin B' and the crystalline resin C' may be used alone or two or more resin components may be used in combination.

As the amorphous resin B' used in the surface layer and the amorphous resin B used in the base material layer, the same kind of resins may be used in combination or different kinds of resins may be used. Additionally, as the crystalline resin C' used in the surface layer and the crystalline resin C used in the base material layer, the same kind of resins may be used in combination or different kinds of resins may be used.

The content of the crystalline resin D in the surface layer is preferably 1 to 60% by mass, more preferably 1 to 50% by mass, further preferably 5 to 50% by mass, further still more preferably 15 to 45% by mass, and particularly preferably 35 to 45% by mass, based on the total mass of the resin components of the surface layer. When the content of the crystalline resin D in the surface layer is within the above-mentioned range, a surface of the film is moderately roughened to obtain a matte effect.

When the surface layer contains the crystalline resin A', the content of the crystalline resin A' in the surface layer is preferably 40 to 99% by mass, more preferably 45 to 95% by mass, further preferably 45 to 90% by mass, further still more preferably 45 to 80% by mass, and particularly preferably 45 to 65% by mass, based on the total mass of the resin components of the surface layer. When the content of the crystalline resin A' in the surface layer is within the above-mentioned range, since stretchability is excellent and roughening also becomes sufficient, this is preferable. When the surface layer contains the crystalline resin A', the mass ratio of the content of the crystalline resin D and the content of the crystalline resin A' is preferably crystalline resin D : crystalline resin A' = 1 : 99 to 60 : 40, more preferably 5 : 95 to 50 : 50, further preferably 15 : 85 to 45 : 55, further still more preferably 25 : 75 to 45 : 55, and particularly preferably 35 : 65 to 45 : 55.

When the surface layer contains the crystalline resin A', the content of the crystalline resin A' contained in the surface layer and the content of the crystalline resin A contained in the base material layer may be the same or different.

When the surface layer contains the amorphous resin B' and/or the crystalline resin C', the total of the contents of the amorphous resin B' and/or the crystalline resin C' in the surface layer is preferably 5 to 30% by mass, more preferably 7 to 28% by mass, and further preferably 9 to 26% by mass, based on the total mass of the resin components of the surface layer. When the total of the contents of the amorphous resin B' and/or the crystalline resin C' in the surface layer is within the above-mentioned range, a desired total light transmittance and the ununiformity of whiteness like texture of paper are further easily obtained, roughening is improved, and as a result, generation of rupture and the like can be suppressed.

When the surface layer contains the amorphous resin B', the content of the amorphous resin B' contained in the surface layer and the content of the amorphous resin B contained in the base material layer may be the same or different. When the surface layer contains the crystalline resin C', the content of the crystalline resin C' contained in the surface layer and the content of the crystalline resin C contained in the base material layer may be the same or different.

The surface layer may contain, in addition to the crystalline resin D as well as optionally the crystalline resin A', the amorphous resin B' and/or the crystalline resin C', other resin R' as a resin component having a melting point and a glass transition temperature different from those of the crystalline resin D as well as the crystalline resin A', the amorphous resin B', and the crystalline resin C' that are optionally used, in such a range that the effect of the present invention is not impaired, for the purpose of adjusting stretchability, adjusting low temperature impact resistance, adjusting surface roughness, adjusting various physical properties such as rigidity, strength, and elongation, and the like.

As the other resin R', those exemplified as the other resin R used in the base material layer can be used.

When the other resin R' is used in the surface layer, the content of the other resin R' is preferably 35% by mass or less and more preferably 30% by mass or less, based on the total mass of the resin components contained in the surface layer. The lower limit value of the content of the other resin R' is not particularly limited, and is, for example, 0% by mass, 1% by mass or the like.

The surface layer may contain, as necessary, an additive such as a heat stabilizer, an antioxidant, an organic or inorganic lubricant, a chlorine trapping agent, or an antistatic agent as an optional component in addition to the resin components. The additive can be used in an amount in such a range that the effect of the present invention is not impaired. As the additive which can be used in the surface layer, additives exemplified as the additive which can be used in the base material layer can be used.

In addition, as described above, the translucent stretched film 1 of the present invention has texture of paper even when it does not contain an inorganic substance such as calcium carbonate. Hence, it is preferable that the amount of the inorganic substance in the surface layer is 1% by mass or less, 0.5% by mass or less, 0.1% by mass or less, 0.01% by mass or less, 0% by mass (the inorganic substance is not contained) or the like of the total mass of the surface layer so that the above-mentioned characteristics of the present invention are not hindered.

[Production Method and Layer Configuration]

The translucent stretched film 1 of the present invention can be produced, for example, by extrusion-molding a resin composition for forming a base material layer (hereinafter, also referred to as resin composition for a base material layer) obtained by blending a crystalline resin A and an amorphous resin B, optionally, with a crystalline resin C, other resin R and/or an additive, and the like, and a resin composition for forming a surface layer (hereinafter, also referred to as resin composition for a surface layer) obtained by blending a crystalline resin D, optionally, with a crystalline resin A', an amorphous resin B', a crystalline resin C', other resin R' and/or an additive, and the like, and stretching the extrusion-molded product.

Examples of the blending method for preparing the resin composition for a base material layer and the resin composition for a surface layer include a dry blending method, a melt blending method, and the like. For example, when the resin composition for a base material layer is prepared, in the dry blending method, pellets, powder or the like of the crystalline resin A and the amorphous resin B are dry-blended, optionally, together with pellets or powder of the crystalline resin C and/or the other resin R, and/or an additive, with use of a batch-type mixing device or a continuous metering-type mixing device such as a tumbler or a mixer. Additionally, for example, when the resin composition for a base material layer is prepared, in the melt blending method, pellets, powder or the like of the crystalline resin A and the amorphous resin B are supplied, optionally, together with pellets or powder of the crystalline resin C and/or the other resin R and/or an additive, to a kneading machine, and the mixture is melt-kneaded to obtain a melt-blended resin composition. Also, when the resin composition for a surface layer is prepared, the method is similar to the method in the case of the resin composition for a base material layer.

As the kneading machine used in melt kneading, a known kneading machine can be used. For example, a monoaxial screw type or a biaxial or more multiaxial screw type can be used. Furthermore, in the case of a biaxial or more multiaxial screw type, either the same or different direction rotatory screw type kneading machine can be used. In the present invention, the same direction rotatory biaxial screw type kneading machine is preferable since it can easily control the size of the finely divided dispersion.

The kneading temperature during melt kneading is preferably a temperature in a range of 220 to 300°C, and more preferably a temperature in a range of 230 to 280°C. By setting the kneading temperature to the above-mentioned temperature range, the size of the finely divided dispersion of the amorphous resin B, and optionally, the size of the finely divided dispersion of the crystalline resin C are controlled in the crystalline resin A, and optionally, the size of the finely divided dispersion of the amorphous resin B' and/or the crystalline resin C' are(is) controlled in the crystalline resin A', and as a result, a desired total light transmittance can be obtained. Accordingly, such a temperature range is preferable. In order to prevent the deterioration of the resins during melt kneading, the atmosphere may be purged with an inert gas such as nitrogen.

The melt-kneaded resins are pelletized into an appropriate size using a generally known granulating machine, and thereby, a pellet-like melt-blended resin composition can be obtained.

The dry-blended resin composition and/or melt-blended resin composition of the resin composition for a base material layer and/or the resin composition for a surface layer obtained as described above are(is) supplied to an extruder and heat-melted. Then, fine foreign matters are removed with a filter or the like, and thereafter, the blended composition can be melt-extruded into a sheet with a T die.

The screw type of the extruder is not limited, and a monoaxial screw type or a biaxial or more multiaxial screw type can be used. When dry blending is used as a method of mixing resins, a biaxial or more multiaxial screw type is preferable since it is excellent in mixing performance and dispersing performance.

The extrusion temperature is preferably a temperature in a range of 220 to 300°C, and more preferably a temperature in a range of 230 to 290°C. In order to prevent the deterioration of the resins during extrusion, the atmosphere may be purged with an inert gas such as nitrogen.

In the laminating method for obtaining a laminated film, a previously known method, for example, a co-extrusion method, a lamination method, a heat-sealing method or the like can be used. Accordingly, the laminated film of the present invention may be a multilayer film obtained by co-extruding and laminating the resin composition for a base material layer and the resin composition for a surface layer, and stretching the resultant, or may be a laminate of the stretched film of the present invention and other film, or may be a multilayer film obtained by stretching a multilayer unstretched film (a plurality of base material layers may be used, and the kind of each of the base material layers may be the same or different) obtained by sticking unstretched films of base material layer and surface layer that have been extruded as a monolayer.

Examples of the co-extrusion method include a pre-die laminating method of bringing melted resins into contact in a feed block in front of a mold, an intra-die laminating method of bringing melted resins into contact in a path in the interior of a mold, for example, a multi-manifold die, an extra-die laminating method of discharging melted resins from a plurality of concentric lips and bringing them into contact, and the like. The translucent stretched film of the present invention can have, for example, a configuration of two layers of b layer/a layer comprising a surface layer (b layer) and a base material layer (a layer), a configuration of three layers of b layer/a layer/a layer in which the number of base material layers is 2 or b layer/a layer/b layer in which two surface layers are formed, a configuration of three layers of b layer/a layer/c layer in which a surface layer on one side is further made into a separate layer (c layer), a configuration of four layers of b layer/a layer/a layer/c layer in which the number of base material layers is 2, a configuration of four layers of b layer/a layer/a' layer/c layer in which one of two layers constituting base material layers is made into other base material layer (a' layer), or the like.

For example, in the case of the configuration of two layers of b layer/a layer, the mass ratio b : a of the resin composition for a surface layer extruded and used in the b layer and the resin composition for a base material layer used in the a layer is preferably 1 : 9 to 9 : 1, and more preferably 1 : 9 to 3 : 7. Additionally, for example, in the case of the configuration of three layers of b layer/a layer/c layer, the mass ratio b : a : c of the resin composition for a surface layer extruded and used in the b layer, the resin composition for a base material layer used in the a layer, and the resin composition used in the c layer is preferably 1 : 8 : 1 to 8 : 1 : 1, and more preferably 1 : 8 : 1 to 3 : 6 : 1.

The extruded base material layer is brought into the state where the amorphous resin B is dispersed in the crystalline resin A with various sizes. Accordingly, gap parts formed at the periphery of the amorphous resin B by a later stretching step have various sizes, and a partial difference is generated in transmittance, so that the ununiformity of whiteness like texture of paper is obtained.

Examples of the lamination method include an extrusion lamination method of directly extruding a film of a melted resin on other film to mold a laminated film with use of facilities for a melt extrusion molding method used in a T die method, and the like.

Examples of the heat-sealing method include an external heating method of pushing a heated metallic body against a plurality of stuck films from the outside of the films and melting the films by conducted heat to be adhered, and an internal heat generation method of generating heat in films by a high frequency radio wave or ultrasound to adhere the films, and the like.

In the present invention, the above-mentioned laminating methods can be used alone or by combining them in a multiple manner.

When the base material layer includes two or more layers, the same kind of resins may be used in combination or different kinds of resins may be used for the crystalline resin A contained in each of the base material layers, and the content of the crystalline resin A in each of the base material layers may be the same or different. When the base material layer includes two or more layers, this also applies to the amorphous resins B and/or the crystalline resins C contained in each of the base material layers. When the kinds and/or contents thereof are different, for example, both quality and productivity can be easily achieved such that a desired total light transmittance is made to be easily obtained in a layer in which the content of the amorphous resin B and, optionally, the crystalline thermoplastic resin C in the base material layer is large, and stretchability is improved in a layer in which the above content is small, and the like.

Additionally, when the surface layer includes two or more layers and each of the surface layers contains the crystalline resin A', the same kind of resins may be used in combination or different kinds of resins may be used for the crystalline resin A' contained in each of the surface layers, and the content of the crystalline resin A' in each of the surface layers may be the same or different. When the surface layer includes two or more layers and each of the surface layers contains the amorphous resin B' and/or the crystalline resin C', this also applies to the amorphous resin B' and/or the crystalline resin C' contained in each of the surface layers.

The extruded resin sheet is molded into a sheet to become a raw sheet, for example, by a known method of closely attaching the extruded resin sheet on at least one metallic drum set at a temperature of 25°C or higher and lower than 120°C with an air knife, other roll, static electricity or the like.

When the temperature of the metallic drum is within the above-mentioned range, it is possible to control the crystal growth of the crystalline resin A, crystalline resin C, crystalline resin D, and optionally, crystalline resin A' and/or crystalline resin C', so that deformation at the time of stretching is suppressed and it is easy to obtain a desired total light transmittance. The temperature of the metallic drum is more preferably 30 to 100°C, and further preferably 40 to 70°C.

As the stretching method for obtaining the translucent stretched film 1 of the present invention, a known method such as a method of stretching between rolls having different circumferential speeds, a tenter method or a tubular method can be used. As the stretching direction, monoaxial stretching, biaxial stretching, biaxial stretching in an oblique direction or the like is possible, and in biaxial or more multiaxial stretching, either sequential stretching or simultaneous stretching can be applied. Among them, from the viewpoint of easily obtaining a film having a uniform total light transmittance, a simultaneous biaxial stretching method by a tenter method, a sequential biaxial stretching method by a tenter method, and a sequential biaxial stretching method of performing longitudinal (flow, MD) stretching between rolls having different circumferential speeds, and thereafter, performing transverse (width, TD) stretching by a tenter method are preferable.

The stretching is usually performed so that a film temperature (Ts) becomes a temperature between a melting point Tm (A) and a glass transition temperature Tg (A) of the crystalline resin A which is a main resin out of the crystalline resins A contained in the base material layer. Herein, the main resin refers to a resin having the largest content (for example, corresponding to A1 in Example 1) out of the crystalline resins A contained in the base material layer. Herein, the film temperature Ts is a temperature of the film at the time point when the stretching of the film is initiated. In the case where the film temperatures at respective stages are different in multistage stretching such as sequential biaxial stretching, the lowest film temperature out of the temperatures is defined as Ts.

In addition, when Ts is not higher than the glass transition temperature Tg (B) of the amorphous resin B contained in the base material layer, the amorphous resin B cannot be deformed at the time of stretching, gap parts formed at the interface between the crystalline resin A and the amorphous resin B tend to be different in sizes, and it is easy to obtain the ununiformity of whiteness like texture of paper.

Accordingly, in the present invention, a translucent stretched film with a desired total light transmittance and the ununiformity of whiteness like texture of paper is obtained by satisfying the following relational expression:

$$\mathrm{Tm\ (A) > Tg\ (B) > Ts > Tg\ (A)}$$

and accordingly, this is preferable.

When Ts is preferably lower than Tg (B) by 3°C or more and more preferably lower than Tg (B) by 5 to 30°C, a translucent film having a desired total light transmittance is easily obtained, and this is preferable.

In the sequential biaxial stretching method, it is necessary to adjust the stretching temperature and the stretching ratio by the melting point and glass transition temperature of the resin to be used. First, a raw sheet is maintained at a film temperature (Ts) of preferably 100 to 180°C and more preferably 120 to 170°C, and stretched in a longitudinal direction preferably at 2 to 10 times, more preferably 2.5 to 8 times, and further preferably 3 to 6 times by passing the sheet between rolls having different circumferential speeds or by a tenter method. Subsequently, the relevant stretched film is stretched in a transverse direction at preferably 2 to 12 times, more preferably 2.5 to 11.5 times, and further preferably 3 to 11 times at a film temperature (Ts) of preferably 100 to 180°C and more preferably 120 to 175°C by a tenter method, and thereafter, subjected to relaxing and thermal setting, followed by winding. In addition, when the temperature at the time of stretching is raised, the total light transmittance tends to easily increase, and when the temperature is lowered, the total light transmittance tends to easily decrease.

By stretching the film, in the base material layer and optionally the surface layer, gap parts having various sizes are formed at the periphery of the amorphous resin B dispersed in the crystalline resin A. Accordingly, a partial difference is generated in the transmittance, resulting in obtaining the ununiformity of whiteness like texture of paper. In addition, the above-mentioned amorphous resin B itself dispersed in the crystalline resin A is not in a hollow state, but in a solid state (or also referred to as non-hollow state).

When the present film is used for a packaging application or the like, as necessary, a heat-sealable layer can also be laminated on one surface and/or both surfaces of the present film. That is, the translucent stretched film 1 of the present invention may have a heat-sealable layer.

Preferably, the translucent stretched film 1 of the present invention has a heat-sealable layer on a surface opposite to the surface layer. The surface opposite to the surface layer refers to a surface on a back surface side of the present film, for example, in the case where the surface on which the surface layer is formed is defined as a surface on a front side of the present film when seen from the base material layer.

The resin used in the heat-sealable layer is a thermoplastic resin having a melting point of 150°C or lower, and a random copolymer or a block copolymer of two or more selected from the group consisting of $\alpha$-olefin-based monomers having 2 to 10 carbon atoms such as ethylene, propylene, butene, pentene, hexene, octene, and decene is preferable. These copolymers can be used alone or by mixing them.

A particularly preferable resin is a crystalline propylene-$\alpha$-olefin random copolymer in which examples of the $\alpha$-olefin include ethylene, $\alpha$-olefins having 4 to 20 carbon atoms, and the like. It is preferable to use ethylene, butene-1, hexene-1, octene-1 or the like, and it is particularly preferable to use a copolymer or a terpolymer including ethylene or butylene. For example, a propylene-ethylene-butene random copolymer (FL6741G manufactured by Sumitomo Chemical Co., Ltd.) is preferable. In the heat-sealable layer, a blocking preventing agent such as acrylic resin-based fine particles or silica may be used concurrently in such a range that the effect of the present invention is not impaired.

The wound film is aging-treated in the atmosphere at preferably around 20 to 45°C, and thereafter, can be cut into a desired product width. Thus, a stretched film excellent in mechanical strength and rigidity is obtained.

The film can be subjected to corona treatment, plasma treatment, flame treatment or the like online or offline, as necessary. Particularly, when the present film is used in a printing application, it is preferable that one surface and/or both surfaces of the present film are(is) subjected to treatment such as corona treatment, plasma treatment, and flame treatment, for the purpose of improving wet spreading or adherence of a printing ink, or the like. In the present invention, the film surface has a wet tension in accordance with JIS K 6768:1999 of preferably 36 to 45 mN/m, and more preferably 38 to 44 mN/m.

Alternatively, a printability imparting layer having a similar wet tension and, further, having smoothness may be provided.

[Physical Properties, Suitability, and Application of Translucent Stretched Film 1 of the Present Invention]

The translucent stretched film 1 of the present invention has a total light transmittance of 35 to 85%, as described above. When the total light transmittance is less than 35%, the film becomes opaque, and when the film is used in packaging, the contents are hardly identified. On the other hand, when the total light transmittance exceeds 85%, transparency becomes too high, and the visibility of a letter, a pattern or the like printed on the film surface is deteriorated. The translucent stretched film 1 of the present invention has a total light transmittance of preferably 40 to 80%, more preferably 50 to 75%, and further preferably 52 to 70%. When the total light transmittance is within the above-mentioned range, since a stretched film becomes translucent, this is preferable. In the present invention, the total light transmittance is a value measured in accordance with JIS K 7361, and has been measured using a haze meter NDH-5000 manufactured by NIPPON DENSHOKU INDUSTRIES Co., Ltd. or the like.

In the translucent stretched film 1 of the present invention, the surface layer has a 60-degree specular glossiness of preferably 1 to 20%, more preferably 3 to 18%, further preferably 5 to 17%, and particularly preferably 6 to 15%. When the 60-degree specular glossiness is within the above-mentioned range, the texture gives tone of paper and the visibility of a printed letter or pattern becomes good, and thus, this is preferable. In the present invention, the 60-degree specular glossiness is a value measured in accordance with JIS Z 8741 (Method 3).

The translucent stretched film 1 of the present invention has an ash content of preferably 1% by mass or less, more particularly 0.5% by mass or less, and further preferably 0.1% by mass or less, based on the total mass of the film, in order to prevent problems such as pollution of packaged products due to detachment of an inorganic substance, stain of printing plates in a printing application, roughening of a cut surface at the time of cutting, and rapid consumption of a cutting blade. The lower limit value of the ash content is not particularly limited, and it is more preferable as the value is smaller. The lower limit value is, for example, 0.01% by mass, 0% by mass or the like. In the present invention, the ash content can be measured in accordance with A Method of JIS K 7250-1:2006.

The translucent stretched film 1 of the present invention has a thickness of preferably 10 to 150 $\mu$m, more preferably 15 to 100 $\mu$m, and further preferably 20 to 60 $\mu$m, depending on the application thereof. When the thickness of the film is 10 $\mu$m or more, sufficient strength is easily obtained. Meanwhile, when the thickness of the film is 150 $\mu$m or less, stretchability and productivity are excellent.

When the thickness of the base material layer constitutes 60 to 95% of the thickness of the translucent stretched film of the present invention, and the thickness of the surface layer constitutes 5 to 40% of the thickness of the translucent stretched film, there is a tendency that a desired total light transmittance and the ununiformity of whiteness like texture of paper are easily obtained, and a delustered appearance is easily obtained.

The translucent stretched film 1 of the present invention has a density of preferably 0.65 to 0.95 $g/cm^3$, more preferably 0.72 to 0.92 $g/cm^3$, further preferably 0.76 to 0.90 $g/cm^3$, and particularly preferably 0.80 to 0.88 $g/cm^3$. When the density is within the above-mentioned range, the translucency in a range of a desired total light transmittance is easily obtained, and this is preferable. Additionally, by adjusting the density to 0.65 $g/cm^3$ or more, breaking strength and intralayer peeling strength are easily improved, and the present film can be suitably used in a packaging application or the like. The density of the translucent stretched film of the present invention is an apparent density defined in 3.3 of JIS K 7222:2005, and is measured in accordance with the standard.

The translucent stretched film 1 of the present invention preferably has pencil writability. Generally, since a plastic film has too smooth a film surface, it cannot be written with a pencil or the like, but in an application such as tracing paper, pencil writability is necessary. When the translucent stretched film of the present invention has the pencil writability, writing with a pencil is possible like paper although the film does not contain inorganic particles, and such a stretched film can be used in an application such as tracing paper. In addition, the pencil writability seems to be an effect that is exerted by moderate roughening of the surface.

The translucent stretched film 1 of the present invention preferably has heat-sealability and/or printability. When the translucent stretched film of the present invention has heat-sealability and/or printability, it can be preferably used in a food packaging application.

The translucent stretched film 1 of the present invention can be suitably used for packaging, food packaging, medicine packaging, decoration, and labeling, or as a base material for a tape, a base material for printing, poster paper, a heat-sensitive paper base material, a recording paper base material or the like.

The present invention will be more specifically described below by way of examples, but the present invention is not limited to these examples.

EXAMPLES

[Melt Mass Flow Rate (MFR) of Resin]

The MFR was measured using a melt indexer manufactured by Toyo Seiki Seisaku-sho, Ltd., in accordance with JIS K 7210:1999. The MFR of each of the crystalline resin A and the crystalline resin A' was measured under conditions of a measurement temperature of 230°C and a load of 2.16 kg, the MFR of each of the amorphous resin B and the amorphous resin B' was measured under conditions of a measurement temperature of 260°C and a load of 2.16 kg, and the MFR of each the crystalline resin C and the crystalline resin C' was measured under conditions of a measurement temperature of 300°C and a load of 1.2 kg. Additionally, the MFR of the crystalline resin D was measured at a measurement temperature of 190°C and a load of 2.16 kg.

[Melting Point and Glass Transition Temperature of Resin]

The melting point and the glass transition temperature were calculated using input compensation type DSC, Diamond DSC, manufactured by PerkinElmer, Inc. by the following procedure. 5 mg of each resin was weighed, packed into a sample holder made of aluminum, and set in a DSC apparatus. Under a nitrogen stream, the temperature was raised from -40°C to 300°C at a rate of 20°C/min., maintained at 300°C for 5 minutes, lowered to -40°C at a rate of 20°C/min., and maintained at -40°C for 5 minutes. From a DSC curve when the temperature was raised again to 300°C at a rate of 20°C/min., the melting point and the glass transition temperature were obtained. A melting peak defined in 9.1 (1) of JIS K 7121 (maximum melting peak when a plurality of melting peaks are observed) was used as a melting point, and an intermediate glass transition temperature defined in 9.3 (1) of JIS K 7121 was used as a glass transition temperature.

[Thickness of Film]

The thickness was measured using a paper thickness measuring device MEI-11 manufactured by CITIZEN SEIMITSU CO., LTD., in accordance with JIS C 2330.

[Total Light Transmittance of Film]

The total light transmittance was measured using a haze meter NDH-5000 manufactured by NIPPON DENSHOKU INDUSTRIES Co., LTD., in accordance with JIS K 7361.

[60-Degree Specular Glossiness of Film]

The 60-degree specular glossiness was measured using a variable angle gloss meter GM-3D Type manufactured by MURAKAMI COLOR RESEARCH LABORATORY CO., Ltd., in accordance with JIS Z 8741 (Method 3). In addition, the measurement was performed in the longitudinal direction and transverse direction of a film, and the glossiness is a value obtained by averaging both measured values.

[Ununiformity of Whiteness]

A film was observed visually by allowing light of a fluorescent lamp to pass therethrough, and the degree of a variation in whiteness was evaluated as follows.

A: There is a sufficient variation in whiteness, and the film can be used as a substitute for paper.
B: There is a variation in whiteness, and the film can be used as a substitute for paper.
C: A variation in whiteness is slightly seen, but the film is insufficient as a substitute for paper.
D: A variation in whiteness is not seen, and the film is uniform.

[Ash Content of Film]

The ash content was measured at an amount of a measurement sample of 200 g, in accordance with JIS-K 7250-1 (2006) A Method.

[Heat-Sealability Evaluating Method]

Under an environment of 23°C and 50% RH, in a state where heat-sealable surfaces of two samples which had been cut into 250 mm in the MD direction and 50 mm in the TD direction were superimposed, heat-sealing treatment was performed under conditions of a sealing temperature of 110°C, a sealing pressure of 200 KPa, a sealing time of 2 seconds, and a width of a heat-sealing part (corresponding to the MD direction of the film) of 1 cm with use of a heat gradient heat-sealer HG-100-2 (manufactured by Toyo Seiki Seisaku-sho, Ltd.). Then, the TD direction of the sample, the temperature of which had been adjusted to 23°C, was cut into 25 mm. Thereafter, using a tensile testing machine Technograph TGI-1kN (manufactured by MINERVA Co., Ltd.), each end part of the two films was held with upper and lower chucks, and 180° peeling was performed at a tension speed of 300 mm/min. A maximum value of stress at that time was measured. The average value of the above-mentioned three measurements was used as the adhesion strength (N/25 mm) of the heat-sealing part.

The adhesion strength was evaluated as follows.

A: 4 N or more and less than 6 N: The heat-sealing strength is moderate, and openability is excellent.
B: 6 N or more and less than 8 N: The heat-sealing strength is slightly high, but openability is good to a practical degree.
C: 8 N or more: The heat-sealing strength is high, and there is a problem with openability.
D: Less than 4 N: The heat-sealing strength is low, being impractical.

[Printability Evaluating Method]

Four-color gravure printing was performed with a rotogravure printing machine (OSG-550HDX manufactured by ORIENT SOGYO CO., LTD.) using ink Altima NT805 manufactured by DIC Graphics Corporation. For each of the four colors of CMYK, five gradations of 100%, 90%, 80%, 70%, and 60% were printed, and a printed part (20 squares of four colors × five gradations) was visually observed and evaluated as follows.

A: Dot blanking is not seen in any square, and moreover, printing is clear, being very good.
B: Dot blanking is not seen in any square, being good.
C: There are 1 or more and 6 or less squares in which dot blanking is seen, but there is no practical problem.
D: There are 7 or more and 12 or less squares in which dot blanking is seen, being practically not preferable.
E: There are 13 or more squares in which dot blanking is seen, being impractical.

[Pencil Writability]

Each film was written with an HB pencil, and the written state was evaluated based on the following criteria.

A: The film is written densely and clearly, and the writability is very excellent.
B: While being inferior to evaluation A, the film is written densely and clearly, and the writability is excellent.
C: The film can be written at readable concentration, and there is no practical problem.
D: The film can be written faint, and there is a practical problem.
E: The film cannot be written.

[Wet Tension]

The wet tension of the film surface was measured for a corona-treated surface, one day after corona treatment of a stretched film, in accordance with JIS K 6768:1999.

In examples and comparative examples, the following resins were used as the crystalline resin A and/or the crystalline resin A'.

- Prime Polypro (registered trademark) F-300SP (hereinafter, also referred to as resin A1 or A'1): manufactured by Prime Polymer Co., Ltd., crystalline propylene homopolymer, MFR at 230°C and 2.16 kg = 3 g/10 min., melting point 160°C, glass transition temperature -7°C
- WINTEC (registered trademark) WFW5T (hereinafter, also referred to as resin A2 or A'2): manufactured by Japan Polypropylene Corporation, crystalline propylene-ethylene copolymer, MFR at 230°C and 2.16 kg = 3.5 g/10 min., melting point 142°C, glass transition temperature -19°C

In examples and comparative examples, the following resins were used as the amorphous resin B and/or the amorphous resin B'.

- TOPAS (registered trademark) 6015S-04 (hereinafter, also referred to as resin B1 or B'1): manufactured by Topas Advanced Polymers GmbH, amorphous norbornene-ethylene copolymer, MFR at 260°C and 2.16 kg = 4.1 g/10 min., glass transition temperature 158°C
- APEL (registered trademark) APL6015T (hereinafter, also referred to as resin B2 or B'2): manufactured by Mitsui Chemicals, Inc., amorphous tetracyclododecene-ethylene copolymer, MFR at 260°C and 2.16 kg = 10 g/10 min., glass transition temperature 145°C
- TOPAS (registered trademark) 6013M-07 (hereinafter, also referred to as resin B3 or B'3): manufactured by Topas Advanced Polymers GmbH, amorphous norbornene-ethylene copolymer, MFR at 260°C and 2.16 kg = 14.3 g/10 min., glass transition temperature 142°C

In examples and comparative examples, the following resin was used as the crystalline resin C and/or the crystalline resin C'.

- XAREC (registered trademark) 142ZE (hereinafter, also referred to as resin C1 or C'1): manufactured by Idemitsu Kosan Co., Ltd., polystyrene resin, MFR at 300°C and 1.2 kg = 14 g/10 min., melting point 247°C, glass transition temperature 95°C

In examples and comparative examples, the following resins were used as the crystalline resin D.

- HIZEX (registered trademark) 7000F (hereinafter, also referred to as resin D1): manufactured by Prime Polymer Co., Ltd., high density polyethylene, MFR at 190°C and 2.16 kg = 0.04 g/10 min.
- NOVATEC (registered trademark) HF111K (hereinafter, also referred to as resin D2): manufactured by Japan Polyethylene Corporation, high density polyethylene, MFR at 190°C and 2.16 kg = 0.05 g/10 min.
- NOVATEC (registered trademark) HE30 (hereinafter, also referred to as resin D3): manufactured by Japan Polyethylene Corporation, low density polyethylene, MFR at 190°C and 2.16 kg = 0.30 g/10 min.
- NOVATEC (registered trademark) LF280 (hereinafter, also referred to as resin D4): manufactured by Japan Polyethylene Corporation, low density polyethylene, MFR at 190°C and 2.16 kg = 0.70 g/10 min.

Examples 15-25 do not belong to the invention.

[Example 1]

Pellets of the resin A1, the resin A2, and the resin B1 were dry-blended with a mixer at the ratio shown in Table 1, to prepare a resin composition for a base material layer. Pellets of the resin A'2 and the resin D1 were dry-blended with a mixer at the ratio shown in Table 1, to prepare a resin composition for a surface layer.

The dry-blended resin composition for a base material layer for forming a base material layer was charged into a monoaxial screw-type extruder a from the hopper, and the dry-blended resin composition for a surface layer for forming a surface layer was charged into a monoaxial screw-type extruder b from the hopper. They were melted at 240°C and were extruded as a bilayer laminated resin layer in which the compositions had been laminated into a bilayer configuration of surface layer (b layer)/base material layer (a layer) in the interior of a bilayer multi-manifold die. The mass ratio of extrusion resin amounts between the monoaxial screw-type extruder b and the monoaxial screw-type extruder a was b : a = 2 : 8. An extruded resin sheet was cooled while the base material layer side of the extruded resin sheet was pushed on a cooling drum controlled at 45°C by a pneumatic pressure using an air knife, so that the resin sheet was solidified. In this way, a raw sheet was obtained.

The resulting raw sheet was stretched using a batch-type biaxial stretching machine KARO manufactured by Brueckner. A sequential biaxial stretching method of performing stretching in the longitudinal direction, and thereafter, performing stretching in the transverse direction was conducted as a stretching method. The film temperature (Ts) was raised to 138°C in advance in an oven set at a temperature of 158°C, and the sheet was first stretched in the longitudinal direction to 4 times at a stretching rate of 6 times/sec. Then, the film temperature (Ts) was raised to 141°C in advance in the same oven, and the sheet was stretched in the transverse direction to 10 times at a stretching rate of 1 time/sec. Then, in the same oven, the sheet was relaxed in the transverse direction to 9.5 times at a relaxing rate of 0.5 times/sec., and then, the film was thermally set for 10 seconds, discharged from the oven, and cooled to room temperature, to obtain a stretched film having a thickness of 30 $\mu$m. The surface layer side of the resulting stretched film was corona-treated. The intensity of the corona treatment was adjusted so that the wet tension of the treated surface after one day from the treatment became 40 mN/m. A stretched film of Example 1 was obtained thereby.

[Example 2]

A stretched film of Example 2 was obtained in the same manner as in Example 1 except that, with regard to the surface layer, in place of the ratio of the resin components constituting the surface layer described in Example 1, 80% by mass of the resin A'2 and 20% by mass of the resin D1 were used.

[Example 3]

A stretched film of Example 3 was obtained in the same manner as in Example 1 except that, with regard to the surface layer, in place of the ratio of the resin components constituting the surface layer described in Example 1, 70% by mass of the resin A'2 and 30% by mass of the resin D1 were used.

[Example 4]

A stretched film of Example 4 was obtained in the same manner as in Example 1 except that, with regard to the surface layer, in place of the resin components constituting the surface layer and the ratio thereof described in Example 1, 80% by mass of the resin A'2 and 20% by mass of the resin D2 were used.

[Example 5]

A stretched film of Example 5 was obtained in the same manner as in Example 1 except that, with regard to the surface layer, in place of the resin components constituting the surface layer and the ratio thereof described in Example 1, 60% by mass of the resin A'2, 20% by mass of the resin D1, and 20% by mass of the resin D3 were used.

[Example 6]

A stretched film of Example 6 was obtained in the same manner as in Example 1 except that, with regard to the surface layer, in place of the resin components constituting the surface layer and the ratio thereof described in Example 1, 50% by mass of the resin A'2, 10% by mass of the resin B'1, 20% by mass of the resin D1, and 20% by mass of the resin D3 were used.

[Example 7]

A stretched film of Example 7 was obtained in the same manner as in Example 1 except that, with regard to the surface layer, in place of the resin components constituting the surface layer and the ratio thereof described in Example 1, 50% by mass of the resin A'2, 10% by mass of the resin B'3, 20% by mass of the resin D1, and 20% by mass of the resin D3 were used.

[Example 8]

A stretched film of Example 8 was obtained in the same manner as in Example 1 except that, with regard to the surface layer, in place of the resin components constituting the surface layer and the ratio thereof described in Example 1, 60% by mass of the resin A'2, 20% by mass of the resin D1, and 20% by mass of the resin D4 were used.

[Example 9]

With regard to the base material layer, in place of the resin components constituting the base material layer and the ratio thereof described in Example 1, 83% by mass of the resin A1, 3.5% by mass of the resin A2, 5.5% by mass of the resin B1, and 8% by mass of the resin C1 were used. With regard to the surface layer, in place of the resin components constituting the surface layer and the ratio thereof described in Example 1, 20% by mass of the resin D1 and 80% by mass of the resin A'2 were used. Furthermore, with regard to the melting temperature, the dry-blended resin composition for a base material layer and the dry-blended resin composition for a surface layer were melted at 280°C in place of 240°C. Others (other than those mentioned above) were performed in the same manner as in Example 1 to obtain a stretched film of Example 9.

[Example 10]

With regard to the base material layer, in place of the resin components constituting the base material layer and the ratio thereof described in Example 1, 83% by mass of the resin A1, 3.5% by mass of the resin A2, and 13.5% by mass of the resin B1 were used. With regard to the surface layer, in place of the resin components constituting the surface layer and the ratio thereof described in Example 1, 24.3% by mass of the resin D1, 65.7% by mass of the resin A'2, and 10% by mass of the resin B'1 were used. Others (other than those mentioned above) were performed in the same manner as in Example 1 to obtain a stretched film of Example 10.

[Example 11]

With regard to the base material layer, in place of the resin components constituting the base material layer and the ratio thereof described in Example 1, 83% by mass of the resin A1, 3.5% by mass of the resin A2, and 13.5% by mass of the resin B1 were used. With regard to the surface layer, in place of the resin components constituting the surface layer and the ratio thereof described in Example 1, 20% by mass of the resin D1, 55% by mass of the resin A'2, and 25% by mass of the resin C'1 were used. Furthermore, with regard to the melting temperature, the dry-blended resin composition for a base material layer and the dry-blended resin composition for a surface layer were melted at 280°C in place of 240°C. Others (other than those mentioned above) were performed in the same manner as in Example 1 to obtain a stretched film of Example 11.

[Example 12]

With regard to the base material layer, in place of the resin components constituting the base material layer and the ratio thereof described in Example 1, 83% by mass of the resin A1, 3.5% by mass of the resin A2, and 13.5% by mass of the resin B2 were used. With regard to the surface layer, in place of the resin components constituting the surface layer and the ratio thereof described in Example 1, 20% by mass of the resin D1, 55% by mass of the resin A'2, and 25% by mass of the resin C'1 were used. Furthermore, with regard to the melting temperature, the dry-blended resin composition for a base material layer and the dry-blended resin composition for a surface layer were melted at 280°C in place of 240°C. Others (other than those mentioned above) were performed in the same manner as in Example 1 to obtain a stretched film of Example 12. In addition, the density of the stretched film obtained in Example 12 was 0.89 g/cm$^3$.

[Example 13]

Pellets of the resin A1, the resin A2, the resin B2, and the resin C1 were dry-blended with a mixer at the ratio shown in Table 1, to prepare a resin composition for a base material layer. Pellets of the resin A'2, the resin B'1, the resin C'1, and the resin D1 were dry-blended with a mixer at the ratio shown in Table 1, to prepare a resin composition for a surface layer.

90 parts by mass of a propylene-ethylene-butene random copolymer (Sumitomo NOBLEN (registered trademark) FL6741G manufactured by Sumitomo Chemical Co., Ltd.) and 10 parts by mass of a propylene-butene copolymer (TAFMER (trademark) XM-7070 manufactured by Mitsui Chemicals, Inc.) as resins for a heat-sealable layer, and 0.2 parts by mass of amorphous silica (SYLYSIA 730 manufactured by FUJI SILYSIA CHEMICAL LTD.) as a blocking preventing agent were dry-blended with a mixer, to prepare a resin composition for a heat-sealable layer.

The dry-blended resin composition for a base material layer for forming a base material layer was charged into a monoaxial screw-type extruder a from the hopper, the dry-blended resin composition for a surface layer for forming a surface layer was charged into a monoaxial screw-type extruder b from the hopper, and the resin composition for a heat-sealable layer for forming a heat-sealable layer was charged into a monoaxial screw-type extruder HS from the hopper. They were melted at 280°C and were extruded as a trilayer laminated resin layer in which the compositions had been laminated into a trilayer configuration of surface layer (b layer)/base material layer (a layer)/heat-sealable layer (HS) in the interior of a trilayer multi-manifold die. The mass ratio of extrusion resin amounts among the monoaxial screw-type extruder b, the monoaxial screw-type extruder a, and the monoaxial screw-type extruder HS was 2 : 7 : 1. An extruded resin sheet was cooled while the heat-sealable layer side of the extruded resin sheet was pushed on a cooling drum controlled at 45°C by a pneumatic pressure using an air knife, so that the sheet was solidified. A raw sheet was obtained thereby.

The resulting raw sheet was subjected to the same stretching and corona treatment as those of Example 1, so that a stretched film of Example 13 was obtained. In addition, the density of the stretched film obtained in Example 13 was 0.84 g/cm$^3$.

[Example 14]

With regard to the base material layer, in place of the resin components constituting the base material layer and the ratio thereof described in Example 1, 92% by mass of the resin A1, 5% by mass of the resin A2, and 3% by mass of the resin B1 were used. With regard to the surface layer, in place of the resin components constituting the surface layer and the ratio thereof described in Example 1, 50% by mass of the resin A'2, 10% by mass of the resin B'3, 20% by mass of the resin D1, and 20% by mass of the resin D3 were used. Others (other than those mentioned above) were performed in the same manner as in Example 1 to obtain a stretched film of Example 14.

[Comparative Example 1]

With regard to the base material layer, in place of the resin components constituting the base material layer and the ratio thereof described in Example 1, the resin A1 was used alone without being dry-blended and melt-kneaded. With regard to the layer configuration of the film, in place of the lamination in the bilayer configuration of surface layer (b layer)/base material layer (a layer) in Example 1, only the base material layer (a layer) was formed without forming the surface layer (b layer). Others (other than those mentioned above) were performed in the same manner as in Example 1 to obtain a stretched film of Comparative Example 1. In addition, the density of the stretched film obtained in Comparative Example 1 was 0.97 g/cm$^3$.

[Comparative Example 2]

A stretched film of Comparative Example 2 was obtained in the same manner as in Example 1 except that, with regard to the layer configuration of the film, in place of the lamination in the bilayer configuration of surface layer (b layer)/base material layer (a layer) in Example 1, only the base material layer (a layer) was formed without forming the surface layer (b layer).

[Comparative Example 3]

A stretched film of Comparative Example 3 was obtained in the same manner as in Example 1 except that, with regard to the surface layer, in place of the resin components constituting the surface layer and the ratio thereof described in Example 1, pellets of the resin A'2 were used alone without performing dry blending and melt mixing.

[Comparative Example 4]

With regard to the base material layer, in place of the resin components constituting the base material layer and the ratio thereof described in Example 1, the resin A1 was used alone without being dry-blended and melt mixed. With regard to the surface layer, in place of the resin components constituting the surface layer and the ratio thereof described in Example 1, 20% by mass of the resin D1 and 80% by mass of the resin A'2 were used. Others (other than those mentioned above) were performed in the same manner as in Example 1 to obtain a stretched film of Comparative Example 4.

[Example 15]

Pellets of the resin A1, the resin A2, and the resin C1 were dry-blended with a mixer at the ratio shown in Table 2, to prepare a resin composition for a base material layer. Pellets of the resin A'2 and the resin D1 were dry-blended with a mixer at the ratio shown in Table 2, to prepare a resin composition for a surface layer.

The dry-blended resin composition for a base material layer for forming a base material layer was charged into a monoaxial screw-type extruder a from the hopper and the dry-blended resin composition for a surface layer for forming a surface layer was charged into a monoaxial screw-type extruder b from the hopper. They were melted at 280°C and were extruded as a bilayer laminated resin layer in which the compositions had been laminated into a bilayer configuration of surface layer (b layer)/base material layer (a layer) in the interior of a bilayer multi-manifold die. The mass ratio of extrusion resin amounts between the monoaxial screw-type extruder b and the monoaxial screw-type extruder a was b : a = 2 : 8. An extruded resin sheet was cooled while the base material layer side of the extruded resin sheet was pushed on a cooling drum controlled at 45°C by a pneumatic pressure using an air knife, so that the resin sheet was solidified. In this way, a raw sheet was obtained.

The resulting raw sheet was stretched using a batch-type biaxial stretching machine KARO manufactured by Brueckner. A sequential biaxial stretching method of performing stretching in the longitudinal direction, and thereafter, performing stretching in the transverse direction was conducted as a stretching method. The film temperature (Ts) was raised to 138°C in advance in an oven set at a temperature of 158°C, and the sheet was first stretched in the longitudinal direction to 4 times at a stretching rate of 6 times/sec. Then, the film temperature (Ts) was raised to 141°C in advance in the same oven, and the sheet was stretched in the transverse direction to 10 times at a stretching rate of 1 time/sec. Then, in the same oven, the sheet was relaxed in the transverse direction to 9.5 times at a relaxing rate of 0.5 times/sec., and then, the film was thermally set for 10 seconds, discharged from the oven, and cooled to room temperature, to obtain a stretched film having a thickness of 30 μm. The surface layer side of the resulting stretched film was corona-treated. The intensity of the corona treatment was adjusted so that the wet tension of the treated surface after one day from the treatment became 40 mN/m. A stretched film of Example 15 was obtained thereby.

[Example 16]

A stretched film of Example 16 was obtained in the same manner as in Example 15 except that, with regard to the surface layer, in place of the ratio of the resin components constituting the surface layer described in Example 15, 80% by mass of the resin A'2 and 20% by mass of the resin D1 were used.

[Example 17]

A stretched film of Example 17 was obtained in the same manner as in Example 15 except that, with regard to the surface layer, in place of the ratio of the resin components constituting the surface layer described in Example 15, 70% by mass of the resin A'2 and 30% by mass of the resin D1 were used.

[Example 18]

A stretched film of Example 18 was obtained in the same manner as in Example 15 except that, with regard to the surface layer, in place of the resin components constituting the surface layer and the ratio thereof described in Example 15, 80% by mass of the resin A'2 and 20% by mass of the resin D2 were used.

[Example 19]

A stretched film of Example 19 was obtained in the same manner as in Example 15 except that, with regard to the surface layer, in place of the resin components constituting the surface layer and the ratio thereof described in Example 15, 60% by mass of the resin A'2, 20% by mass of the resin D1, and 20% by mass of the resin D3 were used.

[Example 20]

A stretched film of Example 20 was obtained in the same manner as in Example 15 except that, with regard to the surface layer, in place of the resin components constituting the surface layer and the ratio thereof described in Example 15, 50% by mass of the resin A'2, 20% by mass of the resin D1, 20% by mass of the resin D3, and 10% by mass of the resin C'1 were used.

[Example 21]

A stretched film of Example 21 was obtained in the same manner as in Example 15 except that, with regard to the surface layer, in place of the resin components constituting the surface layer and the ratio thereof described in Example 15, 60% by mass of the resin A'2, 20% by mass of the resin D1, and 20% by mass of the resin D4 were used.

[Example 22]

With regard to the base material layer, in place of the resin components constituting the base material layer and the ratio thereof described in Example 15, 83% by mass of the resin A1, 3.5% by mass of the resin A2, and 13.5% by mass of the resin C1 were used. With regard to the surface layer, in place of the resin components constituting the surface layer and the ratio thereof described in Example 15, 20% by mass of the resin D1, 55% by mass of the resin A'2, and 25% by mass of the resin C'1 were used. Others (other than those mentioned above) were performed in the same manner as in Example 15 to obtain a stretched film of Example 22.

[Example 23]

With regard to the base material layer, in place of the resin components constituting the base material layer and the ratio thereof described in Example 15, 83% by mass of the resin A1, 3.5% by mass of the resin A2, and 13.5% by mass of the resin C1 were used. With regard to the surface layer, in place of the resin components constituting the surface layer and the ratio thereof described in Example 15, 24.3% by mass of the resin D1, 65.7% by mass of the resin A'2, and 10% by mass of the resin B1 were used. Others (other than those mentioned above) were performed in the same manner as in Example 15 to obtain a stretched film of Example 23.

[Example 24]

With regard to the base material layer, in place of the resin components constituting the base material layer and the ratio thereof described in Example 15, 86.5% by mass of the resin A1, 3.5% by mass of the resin A2, and 10% by mass of the resin C2 were used. With regard to the surface layer, in place of the resin components constituting the surface layer and the ratio thereof described in Example 15, 20% by mass of the resin D1, 55% by mass of the resin A'2, and 25% by mass of the resin C'1 were used. Others (other than those mentioned above) were performed in the same manner as in Example 15 to obtain a stretched film of Example 24.

[Example 25]

Pellets of the resin A1, the resin A2, and the resin C1 were dry-blended with a mixer at the ratio shown in Table 2, to prepare a resin composition for a base material layer. Pellets of the resin A'2, the resin B1, the resin C'1, and the resin D1 were dry-blended with a mixer at the ratio shown in Table 2, to prepare a resin composition for a surface layer.
90 parts by mass of a propylene-ethylene-butene random copolymer (Sumitomo NOBLEN (registered trademark) FL 6741G manufactured by Sumitomo Chemical Co., Ltd.) and 10 parts by mass of a propylene-butene copolymer (TAFMER (trademark) XM-7070 manufactured by Mitsui Chemicals, Inc.) as resins for a heat-sealable layer, and 0.2 parts by mass of amorphous silica (SYLYSIA 730 manufactured by FUJI SILYSIA CHEMICAL LTD.) as a blocking preventing agent were dry-blended with a mixer, to prepare a resin composition for a heat-sealable layer.
The dry-blended resin composition for a base material layer for forming a base material layer was charged into a monoaxial screw-type extruder a from the hopper, the dry-blended resin composition for a surface layer for forming a surface layer was charged into a monoaxial screw-type extruder b from the hopper, and the resin composition for a heat-sealable layer for forming a heat-sealable layer was charged into a monoaxial screw-type extruder HS from the hopper. They were melted at 280°C and were extruded as a trilayer laminated resin layer in which the compositions had been laminated into a trilayer configuration of surface layer (b layer)/base material layer (a layer)/heat-sealable layer (HS) in the interior of a trilayer multi-manifold die. The mass ratio of extrusion resin amounts among the monoaxial screw-type extruder b, the monoaxial screw-type extruder a, and the monoaxial screw-type extruder HS was 2 : 7 : 1. An extruded resin sheet was cooled while the heat-sealable layer side of the extruded resin sheet was pushed on a cooling drum controlled at 45°C by a pneumatic pressure using an air knife, so that the resin sheet was solidified. A raw sheet was obtained thereby.
The resulting raw sheet was subjected to the same stretching and corona treatment as those of Example 15, so that a stretched film of Example 25 was obtained.

[Comparative Example 5]

With regard to the base material layer, in place of the resin components constituting the base material layer and the ratio thereof described in Example 15, the resin A1 was used alone without being dry-blended and melt-kneaded. With regard to the layer configuration of the film, in place of the lamination in the bilayer configuration of surface layer (b layer)/base material layer (a layer) in Example 15, only the base material layer (a layer) was formed without forming the surface layer (b layer). Others (other than those mentioned above) were performed in the same manner as in Example 15 to obtain a stretched film of Comparative Example 5.

[Comparative Example 6]

A stretched film of Comparative Example 6 was obtained in the same manner as in Example 15 except that, with regard to the layer configuration of the film, in place of the lamination in the bilayer configuration of surface layer (b layer)/base material layer (a layer) in Example 15, only the base material layer (a layer) was formed without forming the surface layer (b layer).

[Comparative Example 7]

A stretched film of Comparative Example 7 was obtained in the same manner as in Example 15 except that, with regard to the surface layer, in place of the resin components constituting the surface layer and the ratio thereof described in Example 15, pellets of the resin A'2 were used alone without being dry-blended and melt-mixed.

[Comparative Example 8]

With regard to the base material layer, in place of the resin components constituting the base material layer and the ratio thereof described in Example 15, the resin A1 was used alone without being dry-blended and melt-mixed. With regard to the surface layer, in place of the resin components constituting the surface layer and the ratio thereof described in Example 15, 20% by mass of the resin D1 and 80% by mass of the resin A'2 were used. Others (other than those mentioned above) were performed in the same manner as in Example 15 to obtain a stretched film of Comparative Example 8.

The following Tables 1 to 4 show the measurement and evaluation results of the stretched films obtained in respective examples, together with the constitution of the resins used in the stretched films. In the printability of Tables 3 and 4, -**means that evaluation was not performed because a stretched film having both low glossiness and ununiformity of whiteness was not obtained.

[Table 1]

| | Layer configuration | Base material layer (a layer) | | | | | | | | | Surface layer (b layer) | | | | | | | | | | | | Mass ratio of extrusion resin amount b: a or b: a: HS | Heat-sealable layer |
| | | A | | | B | | | C | | | D | | | A' | | | B' | | | C' | | | | |
| | | Resin | Melting point °C | Mass % | Resin | Tg °C | Mass % | Resin | Melting point °C | Mass % | Resin | Melting point °C | Mass % | Resin | Melting point °C | Mass % | Resin | Tg °C | Mass % | Resin | Melting point °C | Mass % | | |
| Example 1 | b-a | A1 A2 | 160 142 | 86.5 3.5 | B1 | 158 | 10 | - | - | - | D1 | 131 | 10 | A'2 | 142 | 90 | - | - | - | - | - | - | 2:8 | None |
| Example 2 | b-a | A1 A2 | 160 142 | 86.5 3.5 | B1 | 158 | 10 | - | - | - | D1 | 131 | 20 | A'2 | 142 | 80 | - | - | - | - | - | - | 2:8 | None |
| Example 3 | b-a | A1 A2 | 160 142 | 86.5 3.5 | B1 | 158 | 10 | - | - | - | D1 | 131 | 30 | A'2 | 142 | 70 | - | - | - | - | - | - | 2:8 | None |
| Example 4 | b-a | A1 A2 | 160 142 | 86.5 3.5 | B1 | 158 | 10 | - | - | - | D2 | 130 | 20 | A'2 | 142 | 80 | - | - | - | - | - | - | 2:8 | None |
| Example 5 | b-a | A1 A2 | 160 142 | 86.5 3.5 | B1 | 158 | 10 | - | - | - | D1 D3 | 131 108 | 20 20 | A'2 | 142 | 60 | - | - | - | - | - | - | 2:8 | None |
| Example 6 | b-a | A1 A2 | 160 142 | 86.5 3.5 | B1 | 158 | 10 | - | - | - | D1 D3 | 131 108 | 20 20 | A'2 | 142 | 50 | B'1 | 158 | 10 | - | - | - | 2:8 | None |
| Example 7 | b-a | A1 A2 | 160 142 | 86.5 3.5 | B1 | 158 | 10 | - | - | - | D1 D3 | 131 108 | 20 20 | A'2 | 142 | 50 | B'3 | 142 | 10 | - | - | - | 2:8 | None |
| Example 8 | b-a | A1 A2 | 160 142 | 86.5 3.5 | B1 | 158 | 10 | - | - | - | D1 D4 | 131 115 | 20 20 | A'2 | 142 | 60 | - | - | - | - | - | - | 2:8 | None |
| Example 9 | b-a | A1 A2 | 160 142 | 83 3.5 | B1 | 158 | 5.5 | C1 | 247 | 8 | D1 | 131 | 20 | A'2 | 142 | 80 | - | - | - | - | - | - | 2:8 | None |
| Example 10 | b-a | A1 A2 | 160 142 | 83 3.5 | B1 | 158 | 13.5 | - | - | - | D1 | 131 | 24.3 | A'2 | 142 | 65.7 | B'1 | 158 | 10 | - | - | - | 2:8 | None |
| Example 11 | b-a | A1 A2 | 160 142 | 83 3.5 | B1 | 158 | 13.5 | - | - | - | D1 | 131 | 20 | A'2 | 142 | 55 | - | - | - | C'1 | 247 | 25 | 2:8 | None |
| Example 12 | b-a | A1 A2 | 160 142 | 83 3.5 | B2 | 145 | 13.5 | - | - | - | D1 | 131 | 20 | A'2 | 142 | 55 | - | - | - | C'1 | 247 | 25 | 2:8 | None |
| Example 13 | b-a-HS | A1 A2 | 160 142 | 83 3.5 | B1 | 158 | 5.5 | C1 | 247 | 8 | D1 | 131 | 10 | A'2 | 142 | 65.5 | B'1 | 158 | 9.5 | C'1 | 247 | 15 | 2:7:1 | Presence |
| Example 14 | b-a | A1 A2 | 160 142 | 92 5 | B1 | 158 | 3 | - | - | - | D1 D3 | 131 108 | 20 20 | A'2 | 142 | 50 | B'3 | 142 | 10 | - | - | - | 2:8 | None |
| Comparative Example 1 | a | A1 | 160 | 100 | - | - | - | - | - | - | - | - | - | - | - | - | - | - | - | - | - | - | - | None |
| Comparative Example 2 | a | A1 A2 | 160 142 | 86.5 3.5 | B1 | 158 | 10 | - | - | - | - | - | - | - | - | - | - | - | - | - | - | - | - | None |
| Comparative Example 3 | b-a | Al A2 | 160 142 | 86.5 3.5 | B1 | 158 | 10 | - | - | - | - | - | - | A'2 | 142 | 100 | - | - | - | - | - | - | 2:8 | None |
| Comparative Example 4 | b-a | A1 | 160 | 100 | - | - | - | - | - | - | D1 | 131 | 20 | A'2 | 142 | 80 | - | - | - | - | - | - | 2:8 | None |

27

[Table 2]

| | Layer configuration | Base material layer (a layer) | | | | | | Surface layer (b layer) | | | | | | | | | | | | | | Mass ratio of extrusion resin amount b: a or b: a: HS | Heat-sealable layer |
|---|---|---|---|---|---|---|---|---|---|---|---|---|---|---|---|---|---|---|---|---|---|---|---|
| | | A | | | C | | | D | | | A' | | | C' | | | B | | | | | | |
| | | Resin | Melting point °C | Mass % | Resin | Melting point °C | Mass % | Resin | Melting point °C | Mass % | Resin | Melting point °C | Mass % | Resin | Melting point °C | Mass % | Resin | Tg °C | Mass % | | | | |
| Example 15 | b-a | A1 A2 | 160 142 | 86.5 3.5 | C1 | 247 | 10 | D1 | 131 | 10 | A'2 | 142 | 90 | - | - | - | - | - | - | | | 2:8 | None |
| Example 16 | b-a | A1 A2 | 160 142 | 86.5 3.5 | C1 | 247 | 10 | D1 | 131 | 20 | A'2 | 142 | 80 | - | - | - | - | - | - | | | 2:8 | None |
| Example 17 | b-a | A1 A2 | 160 142 | 86.5 3.5 | C1 | 247 | 10 | D1 | 131 | 30 | A'2 | 142 | 70 | - | - | - | - | - | - | | | 2:8 | None |
| Example 18 | b-a | A1 A2 | 160 142 | 86.5 3.5 | C1 | 247 | 10 | D2 | 130 | 20 | A'2 | 142 | 80 | - | - | - | - | - | - | | | 2:8 | None |
| Example 19 | b-a | A1 A2 | 160 142 | 86.5 3.5 | C1 | 247 | 10 | D1 D3 | 131 108 | 20 20 | A'2 | 142 | 60 | - | - | - | - | - | - | | | 2:8 | None |
| Example 20 | b-a | A1 A2 | 160 142 | 86.5 3.5 | C1 | 247 | 10 | D1 D3 | 131 108 | 20 20 | A'2 | 142 | 50 | C'1 | 247 | 10 | - | - | - | | | 2:8 | None |
| Example 21 | b-a | A1 A2 | 160 142 | 86.5 3.5 | C1 | 247 | 10 | D1 D4 | 131 115 | 20 20 | A'2 | 142 | 60 | - | - | - | - | - | - | | | 2:8 | None |
| Example 22 | b-a | A1 A2 | 160 142 | 83 3.5 | C1 | 247 | 13.5 | D1 | 131 | 20 | A'2 | 142 | 55 | C'1 | 247 | 25 | - | - | - | | | 2:8 | None |
| Example 23 | b-a | A1 A2 | 160 142 | 83 3.5 | C1 | 247 | 13.5 | D1 | 131 | 24.3 | A'2 | 142 | 65.7 | - | - | - | B1 | 158 | 10 | | | 2:8 | None |
| Example 24 | b-a | A1 A2 | 160 142 | 86.5 3.5 | C2 | 232 | 10 | D1 | 131 | 20 | A'2 | 142 | 55 | C'1 | 247 | 25 | - | | | | | 2:8 | None |
| Example 25 | b-a-HS | A1 A2 | 160 142 | 83 3.5 | C1 | 247 | 13.5 | D1 | 131 | 10 | A'2 | 142 | 65.5 | C'1 | 247 | 15 | B1 | 158 | 9.5 | | | 2:7:1 | Presence |
| Comparative Example 5 | a | A1 | 160 | 100 | - | | | - | - | - | - | - | - | - | - | - | - | - | - | | | - | None |
| Comparative Example 6 | a | A1 A2 | 160 142 | 86.5 3.5 | C1 | 247 | 10 | - | - | - | - | - | - | - | - | - | - | - | - | | | - | None |
| Comparative Example 7 | b-a | A1 A2 | 160 142 | 86.5 3.5 | C1 | 247 | 10 | - | - | - | A'2 | 142 | 100 | - | - | - | - | - | - | | | 2:8 | None |
| Comparative Example 8 | b-a | A1 | 160 | 100 | - | - | - | D1 | 131 | 20 | A'2 | 142 | 80 | - | - | - | - | - | - | | | 2:8 | None |

[Table 3]

| | Layer configuration | Total Light transmittance | Glossiness 60° | Ununiformity of whiteness | Ash content | Heat-sealability | Printability | Pencil writability |
|---|---|---|---|---|---|---|---|---|
| | | % | % | | % | | | |
| Example 1 | b-a | 63.4 | 16.6 | A | 0.09 | - | B | B |
| Example 2 | b-a | 61.0 | 11.2 | A | 0.08 | - | B | B |
| Example 3 | b-a | 60.4 | 10.9 | A | 0.08 | - | C | C |
| Example 4 | b-a | 63.4 | 11.8 | A | 0.08 | - | B | B |
| Example 5 | b-a | 58.4 | 10.8 | A | 0.08 | - | A | A |
| Example 6 | b-a | 60.3 | 9.8 | A | 0.08 | - | A | A |
| Example 7 | b-a | 60.5 | 10.1 | A | 0.08 | - | A | A |
| Example 8 | b-a | 59.2 | 11.1 | A | 0.08 | - | A | A |
| Example 9 | b-a | 54.6 | 10.8 | A | 0.08 | - | B | B |
| Example 10 | b-a | 64.0 | 10.0 | A | 0.07 | - | C | C |
| Example 11 | b-a | 55.8 | 9.6 | A | 0.07 | - | B | B |
| Example 12 | b-a | 69.6 | 8.7 | B | 0.07 | - | B | B |
| Example 13 | b-a-HS | 58.4 | 13.6 | A | 0.08 | A | B | B |
| Example 14 | b-a | 78.0 | 10.0 | B | 0.10 | - | A | A |
| Comparative Example 1 | a | 92.0 | 162.0 | D | 0.10 | - | -** | E |
| Comparative Example 2 | a | 63.0 | 84.0 | A | 0.09 | - | -** | E |
| Comparative Example 3 | b-a | 66.1 | 87.3 | A | 0.09 | - | -** | E |
| Comparative Example 4 | b-a | 90.0 | 12.2 | D | 0.10 | - | -** | B |

[Table 4]

| | Layer configuration | Total Light transmittance | Glossiness 60° | Ununiformity of whiteness | Ash content | Heat-sealability | Printability | Pencil writ ability |
|---|---|---|---|---|---|---|---|---|
| | | % | % | | % | | | |
| Example 15 | b-a | 61.5 | 16.4 | A | 0.09 | - | B | B |
| Example 16 | b-a | 59.7 | 14.4 | A | 0.08 | - | B | B |
| Example 17 | b-a | 58.0 | 14.2 | A | 0.08 | - | C | C |
| Example 18 | b-a | 60.0 | 14.8 | A | 0.08 | - | B | B |
| Example 19 | b-a | 56.4 | 12.5 | A | 0.08 | - | A | A |
| Example 20 | b-a | 57.9 | 11.9 | A | 0.08 | - | A | A |
| Example 21 | b-a | 56.7 | 13.0 | A | 0.08 | - | A | A |
| Example 22 | b-a | 57.6 | 12.1 | A | 0.07 | - | B | B |
| Example 23 | b-a | 63.3 | 13.4 | A | 0.07 | - | C | C |
| Example 24 | b-a | 68.4 | 12.3 | B | 0.07 | - | B | B |
| Example 25 | b-a-HS | 61.0 | 14.5 | A | 0.08 | A | B | B |
| Comparative Example 5 | a | 92.0 | 162.0 | D | 0.10 | - | -** | E |
| Comparative Example 6 | a | 59.3 | 74.4 | A | 0.09 | - | -** | E |
| Comparative Example 7 | b-a | 61.0 | 76.8 | A | 0.09 | - | -** | E |
| Comparative Example 8 | b-a | 90.0 | 12.2 | D | 0.10 | - | -** | B |

EP 3 466 679 B1

As shown in Tables 1 and 3, the stretched films of Examples 1 to 14 were translucent stretched films having a remarkably low glossiness and a total light transmittance of between 35 and 85%. Furthermore, these films had printability and pencil writability even when they did not contain an inorganic pigment (inorganic particles). Accordingly, it is understood that since the translucent stretched film of the present invention exhibits texture like paper due to a moderate translucency and a low glossiness while being a film also having moisture resistance, water resistance, oil resistance, and mechanical strength which are excellent as compared with those of paper, and further has printability and pencil writability, it can be used as a substitute for paper.

Furthermore, it can be understood that since the stretched film of Example 13 also has heat-sealability, it can be also suitably used, for example, in packaging form requiring heat-sealability for foods such as bread, or the like.

In contrast, in Comparative Example 1 in which the crystalline resin A was used alone in the base material layer and the surface layer was not formed, only the transparent film having no ununiformity of whiteness and having a high glossiness was obtained. Furthermore, in Comparative Example 2 in which the surface layer was not formed, the translucency and the ununiformity of whiteness were obtained but the glossiness was high, and a stretched film having a delustered appearance was not obtained. Furthermore, also in Comparative Example 3 in which the crystalline resin A was used alone without using the crystalline resin D in the surface layer, the translucency and the ununiformity of whiteness were obtained but the glossiness was high, and a stretched film having a delustered appearance was not obtained. Furthermore, in Comparative Example 4 in which the amorphous resin B was not used in the base material layer, the ununiformity of whiteness was not obtained. That is, the films obtained in Comparative Examples 1 to 4 did not exhibit an appearance like paper.

As shown in Tables 2 and 4, the stretched films of Examples 15 to 25 (not belonging to the invention) were translucent stretched films having a remarkably low glossiness and a total light transmittance of between 35 and 85%. Furthermore, these films had printability and pencil writability even when they did not have an inorganic pigment (inorganic particles).

Additionally, it can be understood that since the stretched film of Example 25 also has heat-sealability, it can be also suitably used, for example, in packaging form requiring heat-sealability for foods such as bread, or the like.

In contrast, in Comparative Example 5 in which the crystalline resin A was used alone in the base material layer and the surface layer was not formed, only the transparent film having no ununiformity of whiteness and having a high glossiness was obtained. In Comparative Example 6 in which the surface layer was not formed, the translucency and the ununiformity of whiteness were obtained but the glossiness was high, and a stretched film having a delustered appearance was not obtained. Furthermore, also in Comparative Example 7 in which the crystalline resin A was used alone without using the crystalline resin D in the surface layer, the translucency and the ununiformity of whiteness were obtained but the glossiness was high, and a stretched film having a delustered appearance was not obtained. Furthermore, in Comparative Example 8 in which the crystalline resin C was not used in the base material layer, the ununiformity of whiteness was not obtained. That is, the films obtained in Comparative Examples 5 to 8 did not exhibit an appearance like paper.

**Claims**

1. A translucent stretched film comprising at least a base material layer and a surface layer,
   wherein
   said base material layer has at least one layer containing, as resin components, at least a crystalline thermoplastic resin A having a melting point of 120 to 175°C and an amorphous thermoplastic resin B,
   said surface layer contains, as a resin component, at least a crystalline thermoplastic resin D having a melt mass flow rate at 190°C and 2.16 kg of 0.02 to 2 g/10 min., and
   said translucent stretched film has a total light transmittance of 35 to 85%.

2. The translucent stretched film according to claim 1, wherein said amorphous thermoplastic resin B has a glass transition temperature of 135 to 185°C, measured by differential scanning calorimetry (DSC).

3. The translucent stretched film according to claim 1 or 2, wherein said base material layer further contains, as a resin component, a crystalline thermoplastic resin C having a melting point of 200 to 280°C.

4. The translucent stretched film according to any one of claims 1 to 3, wherein in said base material layer, a content of said amorphous thermoplastic resin B is 2 to 40% by mass based on a total mass of the resin components of said base material layer.

5. The translucent stretched film according to any one of claims 1 to 4, wherein said surface layer further contains a crystalline thermoplastic resin A' as a resin component.

6.  The translucent stretched film according to any one of claims 1 to 5, wherein in said surface layer, a content of said crystalline thermoplastic resin D is 1 to 60% by mass based on a total mass of the resin components of said surface layer.

7.  The translucent stretched film according to any one of claims 1 to 6, wherein said surface layer further contains, as resin component(s), an amorphous thermoplastic resin B' and/or a crystalline thermoplastic resin C', and a total of contents of the amorphous thermoplastic resin B' and/or the crystalline thermoplastic resin C' is 5 to 30% by mass based on the total mass of the resin components of said surface layer.

8.  The translucent stretched film according to any one of claims 1 to 7, wherein said amorphous thermoplastic resin B is an amorphous cyclic olefin copolymer.

9.  The translucent stretched film according to any one of claims 1 to 8, wherein said crystalline thermoplastic resin D is a high density polyethylene.

10. The translucent stretched film according to any one of claims 1 to 9, which has a heat-sealable layer on a surface opposite to a surface on which said surface layer is laminated.

11. The translucent stretched film according to any one of claims 1 to 10, wherein said surface layer has a 60-degree specular glossiness of 1 to 20%.


**Patentansprüche**

1.  Ein durchscheinender gestreckter Film umfassend mindestens eine Grundmaterialschicht und eine Oberflächenschicht,
    wobei
    die Grundmaterialschicht mindestens eine Schicht aufweist, die als Harzkomponenten mindestens ein kristallines thermoplastisches Harz A mit einem Schmelzpunkt von 120 bis 175 °C enthält und ein amorphes thermoplastisches Harz B,
    wobei die Oberflächenschicht als Harzkomponente mindestens ein kristallines thermoplastisches Harz D mit einem Schmelzmassendurchsatz bei 190 °C und 2,16 kg von 0,02 bis 2 g/10 min. enthält, und
    wobei der durchscheinende gestreckte Film eine Gesamtlichtdurchlässigkeit von 35 bis 85% aufweist.

2.  Der durchscheinende gestreckte Film gemäß Anspruch 1, wobei das amorphe thermoplastische Harz B eine Glasübergangstemperatur von 135 bis 185 °C aufweist, gemessen mittels dynamischer Differenzkalorimetrie (DDK).

3.  Der durchscheinende gestreckte Film gemäß Anspruch 1 oder 2, wobei die Grundmaterialschicht ferner als Harzkomponente ein kristallines thermoplastisches Harz C mit einem Schmelzpunkt von 200 bis 280 °C enthält.

4.  Der durchscheinende gestreckte Film gemäß irgendeinem der Ansprüche 1 bis 3, wobei in der Grundmaterialschicht ein Gehalt des amorphen thermoplastischen Harzes B 2 bis 40 Massen-% bezogen auf eine Gesamtmasse der Harzkomponenten der Grundmaterialschicht beträgt.

5.  Der durchscheinende gestreckte Film gemäß irgendeinem der Ansprüche 1 bis 4, wobei die Oberflächenschicht ferner ein kristallines thermoplastisches Harz A' als Harzkomponente enthält.

6.  Der durchscheinende gestreckte Film gemäß irgendeinem der Ansprüche 1 bis 5, wobei in der Oberflächenschicht ein Gehalt des kristallinen thermoplastischen Harzes D 1 bis 60 Massen-% bezogen auf eine Gesamtmasse der Harzkomponenten der Oberflächenschicht beträgt.

7.  Der durchscheinende gestreckte Film gemäß irgendeinem der Ansprüche 1 bis 6, wobei die Oberflächenschicht ferner als Harzkomponente(n) ein amorphes thermoplastisches Harz B' und/oder ein kristallines thermoplastisches Harz C' und ein Gesamtgehalt des amorphen thermoplastischen Harzes B' und/oder des kristallinen thermoplastischen Harzes C' 5 bis 30 Massen-% bezogen auf die Gesamtmasse der Harzkomponenten der Oberflächenschicht beträgt.

**8.** Der durchscheinende gestreckte Film gemäß irgendeinem der Ansprüche 1 bis 7, wobei das amorphe thermoplastische Harz B ein amorphes cyclisches Olefincopolymer ist.

**9.** Der durchscheinende gestreckte Film gemäß irgendeinem der Ansprüche 1 bis 8, wobei das kristalline thermoplastische Harz D ein Polyethylen hoher Dichte ist.

**10.** Der durchscheinende gestreckte Film gemäß irgendeinem der Ansprüche 1 bis 9, der eine heißsiegelbare Schicht auf einer Oberfläche aufweist, die einer Oberfläche gegenüberliegt, auf der die Oberflächenschicht laminiert ist.

**11.** Der durchscheinende gestreckte Film gemäß irgendeinem der Ansprüche 1 bis 10, wobei die Oberflächenschicht eine 60-Grad-Glanzspiegelung von 1 bis 20% aufweist.

**Revendications**

**1.** Film étiré translucide comprenant au moins une couche de matériau de base et une couche de surface,
dans lequel
ladite couche de matériau de base a au moins une couche contenant, en tant que composants de résine, au moins une résine thermoplastique cristalline A ayant un point de fusion de 120 à 175 °C et une résine thermoplastique amorphe B,
ladite couche de surface contient, en tant qu'un composant de résine, au moins une résine thermoplastique cristalline D ayant un débit massique à l'état fondu à 190 °C et 2,16 kg de 0,02 à 2 g/10 min, et
ledit film étiré translucide a une transmittance de lumière totale de 35 à 85 %.

**2.** Film étiré translucide selon la revendication 1, dans lequel ladite résine thermoplastique amorphe B a une température de transition vitreuse de 135 à 185 °C, mesurée par calorimétrie différentielle à balayage (DSC).

**3.** Film étiré translucide selon la revendication 1 ou 2, dans lequel ladite couche de matériau de base contient en outre, en tant qu'un composant de résine, une résine thermoplastique cristalline C ayant un point de fusion de 200 à 280 °C.

**4.** Film étiré translucide selon l'une quelconque des revendications 1 à 3, dans lequel dans ladite couche de matériau de base, une teneur de ladite résine thermoplastique amorphe B est de 2 à 40 % en masse sur la base d'une masse totale des composants de résine de ladite couche de matériau de base.

**5.** Film étiré translucide selon l'une quelconque des revendications 1 à 4, dans lequel ladite couche de surface contient en outre une résine thermoplastique cristalline A' en tant qu'un composant de résine.

**6.** Film étiré translucide selon l'une quelconque des revendications 1 à 5, dans lequel dans ladite couche de surface, une teneur de ladite résine thermoplastique cristalline D est de 1 à 60 % en masse sur la base d'une masse totale des composants de résine de ladite couche de surface.

**7.** Film étiré translucide selon l'une quelconque des revendications 1 à 6, dans lequel ladite couche de surface contient en outre, en tant que composant(s) de résine, une résine thermoplastique amorphe B' et/ou une résine thermoplastique cristalline C', et un total de teneurs de la résine thermoplastique amorphe B' et/ou de la résine thermoplastique cristalline C' est de 5 à 30 % en masse sur la base de la masse totale des composants de résine de ladite couche de surface.

**8.** Film étiré translucide selon l'une quelconque des revendications 1 à 7, dans lequel ladite résine thermoplastique amorphe B est un copolymère d'oléfine cyclique amorphe.

**9.** Film étiré translucide selon l'une quelconque des revendications 1 à 8, dans lequel ladite résine thermoplastique cristalline D est un polyéthylène haute densité.

**10.** Film étiré translucide selon l'une quelconque des revendications 1 à 9, qui a une couche thermoscellable sur une surface opposée à une surface sur laquelle ladite couche de surface est stratifiée.

**11.** Film étiré translucide selon l'une quelconque des revendications 1 à 10, dans lequel ladite couche de surface a un brillant spéculaire à 60 degrés de 1 à 20 %.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016109469 A
- JP 2016109520 A
- JP 2017083157 A
- JP 2017083158 A
- JP HEI11005852 B
- JP HEI8073618 B
- JP 2003522054 PCT
- JP 2017052932 B
- EP 1340783 A

**Non-patent literature cited in the description**

- Polymer Analysis Handbook. KINOKUNIYA COMPANY LTD, 1995, 610
- **T. HAYASHI et al.** *Polymer,* 1988, vol. 29, 138